# EUROPÄISCHE PATENTSCHRIFT

(11) **EP 2 428 422 B1**
(45) Veröffentlichungstag und Bekanntmachung des Hinweises auf die Patenterteilung: **10.05.2017**
(21) Anmeldenummer: 10178108.6
(22) Anmeldetag: 21.09.2010
(51) Int. Cl.: B61D 17/02

(54) **Fahrzeugkopf**
Vehicle header module
Tête de véhicule

(30) Priorität: 10.09.2010 DE 102010044933
(43) Veröffentlichungstag der Anmeldung: 14.03.2012
(73) Patentinhaber: Bombardier Transportation GmbH, 10785 Berlin (DE)
(72) Erfinder: Orellano Alexander, 13629 Berlin (DE); Schober Martin, 14089 Berlin (DE); Tietze Andreas, 13595 Berlin (DE)
(74) Vertreter: Cohausz & Florack

(56) Entgegenhaltungen:
- DE-A1- 10 109 831
- FR-A1- 2 675 760

## Beschreibung

Die vorliegende Erfindung betrifft ein Wagenkastenmodul mit einer Strömungsleiteinrichtung, gemäß dem Oberbegriff des Anspruchs 1, wobei das Wagenkastenmodul zur Bildung wenigstens eines Teils eines Kopfabschnitts eines auf wenigstens einem Fahrwerk abgestützten Wagenkastens eines Fahrzeugs, insbesondere eines Schienenfahrzeugs für den Hochgeschwindigkeitsverkehr, dient, wobei der Wagenkasten eine Fahrzeuglängsrichtung, eine Fahrzeugquerrichtung und eine Fahrzeughöhenrichtung definiert. Der Kopfabschnitt ist dazu ausgebildet, in einem Normalbetrieb des Fahrzeugs ein vorlaufendes freies Fahrzeugende zu bilden. Die Strömungsleiteinrichtung ist ihrerseits dazu ausgebildet, an einer Unterseite des Wagenkastens in der Fahrzeuglängsrichtung zwischen dem freien Fahrzeugende und einem vorlaufenden Ende eines Fahrwerksausschnitts des Wagenkastens angeordnet zu werden, wobei der Fahrwerksausschnitt das dem freien Fahrzeugende zugeordnete Fahrwerk aufnimmt. Die Strömungsleiteinrichtung ist dazu ausgebildet, im Betrieb des Fahrzeugs einen die Unterseite des Wagenkastens vom freien Fahrzeugende zum Fahrwerksausschnitt hin überstreichenden Luftstrom zu beeinflussen. Die Erfindung betrifft weiterhin einen Wagenkasten sowie ein Fahrzeug mit einem derartigen Wagenkastenmodul.

Bei modernen Schienenfahrzeugen mit vergleichsweise hohen Nennbetriebsgeschwindigkeiten besteht in der Regel das Problem, dass es am Fahrzeugkopf im Bereich des vorlaufenden Fahrwerksausschnitts gerade bei hohen Geschwindigkeiten zu erheblichen Geräuschemissionen kommt. Dies liegt unter anderem daran, dass sich die Strömung im Bereich einer vorlaufenden Strömungsabrisskante am Eintritt in den Fahrwerksausschnitt von der Außenhaut des Wagenkastens ablöst, wobei im weiteren Strömungsverlauf eine sich kontinuierlich aufweitende Scherschicht entsteht. In dieser Scherschicht kommt es in der Regel zur periodischen Ausbildung von Wirbeln (so genannte Kelvin-Helmholtz-Instabilität) und der damit einhergehenden Schallemission. Ein weiteres Problem stellt das vergleichsweise harte Auftreffen der Scherschicht auf nachfolgende Fahrzeugkomponenten dar, insbesondere das Auftreffen auf die Wandung am nachlaufenden Ende des Fahrwerksausschnitts, welches ebenfalls in erheblichem Maß zur Schallemission beiträgt.

Die beschriebenen ungünstigen Strömungsverhältnisse erhöhen zudem den aerodynamischen Widerstand des gesamten Fahrzeuges sowie die Strömungslasten auf das Gleisbett, die zum Aufwirbeln von Gegenständen aus dem Gleisbett (beispielsweise dem so genannten Schotterflug) führen kann.

Das Dokument EP 2 106 983 A2 schlägt in diesem Zusammenhang beim darin offenbarten Wagenkastenmodul vor, im Bereich der Strömungsabrisskante am vorlaufenden Ende des Fahrwerksausschnitts Turbulatoren vorzusehen, welche in Fahrzeugquerrichtung verteilt sind und dazu dienen sollen, eine Vielzahl kleinerer Verwirbelungen in die Scherschicht einzubringen, um die periodische Ausbildung der oben beschriebenen Wirbel zumindest weit gehend zu unterdrücken. Die Turbulatoren können dabei sowohl durch eine stark aufgeraute Oberfläche als auch durch vergleichsweise groß ausgeprägte, in Fahrzeuglängsrichtung ausgerichtete zinnenartige Vorsprünge in der Außenhaut des Wagenkastens gebildet sein. Die zinnenartigen Vorsprünge können ihrerseits wiederum durch auf die Außenhaut aufgesetzte prismatische Elemente oder entsprechende Einkerbungen in der Außenhaut des Wagenkastens ausgebildet sein.

Diese Gestaltung ermöglicht es zwar, über die Erhöhung der Turbulenz in der Scherschicht die Ausbildung periodischer Wirbel und die damit einhergehende Geräuschemission zu reduzieren. Die beschriebene Gestaltung bringt jedoch den Nachteil mit sich, dass sich die Scherschicht in Fahrzeughöhenrichtung vergleichsweise schnell bzw. stark aufweitet, sodass sich eine vergleichsweise große Aufprallfläche der Scherschicht auf nachlaufende Fahrzeugkomponenten (wie das Fahrwerk oder in die nachlaufende Begrenzungswand des Fahrwerksausschnitts) mit der damit einhergehenden insoweit verstärkten Schallemission ergibt. Zum anderen erhöht eine derart stark aufgeweitete Scherschicht natürlich den Strömungswiderstand des Fahrzeugs gegebenenfalls erheblich.

Aus der JP 2006/273294 A ist ein gattungsgemäßes Wagenkastenmodul bekannt, bei dem sich der freie Strömungsquerschnitt von der Fahrzeugspitze zur Strömungsabrisskante hin kontinuierlich verringert, sodass ein vergleichsweise großes Luftvolumen unter das Fahrzeug gelangt und dort zu den beschriebenen Problemen führen kann.

Der vorliegenden Erfindung liegt daher die Aufgabe zu Grunde, ein Wagenkastenmodul der eingangs genannten Art zur Verfügung zu stellen, welches die oben genannten Nachteile nicht oder zumindest in geringerem Maße mit sich bringt und insbesondere auf einfache Weise eine Reduktion der Schallemission des Fahrzeugs ermöglicht.

Die vorliegende Erfindung löst diese Aufgabe ausgehend von einem Wagenkastenmodul gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man auf einfache Weise eine Reduktion der Schallemission des Fahrzeugs im Bereich des Fahrwerksausschnitts erzielt, wenn die Strömungsleiteinrichtung dem Luftstrom im Bereich einer Strömungsabrisskante an dem vorlaufenden Ende des Fahrwerksausschnitts über einen Ablenkungsbereich eine nach unten gerichtete Hauptströmungsrichtung aufprägt. Diese Ablenkung der Strömung nach unten hat den Vorteil, dass die sich ausbildende Scherschicht zumindest teilweise um die angrenzenden Fahrzeugkomponenten herum gelenkt werden kann, sodass, sofern überhaupt, nur noch ein geringerer Teil der Scherschicht auf diese Komponenten auftrifft und hierbei entsprechende Schallemissionen erzeugt. Die Ablenkung der Hauptströmungsrichtung der Strömung nach unten ist dabei ausreichend groß gewählt, um zu erreichen, dass vorzugsweise nur noch höchstens 40% der Scherschicht auf das Fahrwerk bzw. das nachlaufende Ende des Fahrwerksausschnitts aufprallen. Vorzugsweise ist die Hauptströmungsrichtung um wenigstens 3° zur Fahrzeuglängsrichtung geneigt. Hiermit lassen sich besonders günstige Effekte hinsichtlich der Reduktion der Schallemission erzielen.

Gemäß einem Aspekt betrifft die vorliegende Erfindung daher ein Wagenkastenmodul zur Bildung wenigstens eines Teils eines Kopfabschnitts eines auf wenigstens einem Fahrwerk abgestützten Wagenkastens eines Fahrzeugs, insbesondere eines Schienenfahrzeugs für den Hochgeschwindigkeitsverkehr, mit einer Strömungsleiteinrichtung, wobei der Wagenkasten eine Fahrzeuglängsrichtung, eine Fahrzeugquerrichtung und eine Fahrzeughöhenrichtung definiert. Der Kopfabschnitt ist dazu ausgebildet, in einem Normalbetrieb des Fahrzeugs ein vorlaufendes freies Fahrzeugende zu bilden. Die Strömungsleiteinrichtung ist dazu ausgebildet, an einer Unterseite des Wagenkastens in der Fahrzeuglängsrichtung zwischen dem freien Fahrzeugende und einem vorlaufenden Ende eines Fahrwerksausschnitts des Wagenkastens angeordnet zu werden, der das dem freien Fahrzeugende zugeordnete Fahrwerk aufnimmt. Weiterhin ist die Strömungsleiteinrichtung dazu ausgebildet, im Betrieb des Fahrzeugs einen die Unterseite des Wagenkastens vom freien Fahrzeugende zum Fahrwerksausschnitt hin überstreichenden Luftstrom zu beeinflussen. Schließlich ist die Strömungsleiteinrichtung dazu ausgebildet, dem Luftstrom im Bereich einer Strömungsabrisskante an dem vorlaufenden Ende des Fahrwerksausschnitts über einen Ablenkungsbereich eine nach unten gerichtete Hauptströmungsrichtung aufzuprägen, die um wenigstens 3°, vorzugsweise wenigstens 4°, weiter vorzugsweise wenigstens 6°, typischerweise von 3° bis 30°, zur Fahrzeuglängsrichtung geneigt ist.

Die Ablenkung der Hauptströmungsrichtung nach unten kann grundsätzlich beliebig groß gewählt werden. Besonders günstig ist es jedoch, wenn die Strömung nicht zu weit nach unten in Richtung des Gleisbettes abgelenkt wird, um ungünstige Effekte, wie beispielsweise eine Erhöhung des Strömungswiderstandes, das Auslösen von Schotterflug etc., soweit als möglich zu vermeiden. Bevorzugt ist die Hauptströmungsrichtung daher um 3° bis 30°, vorzugsweise um 5° bis 20°, weiter vorzugsweise um 7° bis 15°, weiter vorzugsweise um 4° bis 8°, weiter vorzugsweise um 5° bis 7°, insbesondere um 6° bis 9°, zur Fahrzeuglängsrichtung geneigt.

Weiterhin kann sich der Ablenkungsbereich in der Fahrzeugquerrichtung grundsätzlich über einen beliebigen, ausreichend großen Abschnitt des Wagenkastens erstrecken. Bevorzugt erstreckt sich der Ablenkungsbereich in der Fahrzeugquerrichtung über wenigstens 60%, vorzugsweise über wenigstens 80%, weiter vorzugsweise über wenigstens 100%, weiter vorzugsweise über wenigstens 120%, einer Spurweite des Fahrwerks, wodurch eine besonders günstige, starke Reduktion der Schallemissionen erzielt werden kann.

Der Ablenkungsbereich ist in der Regel ein zusammenhängender Bereich, der in Fahrzeugquerrichtung bevorzugt mittig angeordnet ist. Es versteht sich jedoch, dass der Ablenkungsbereich gegebenenfalls auch aus mehreren voneinander getrennten Abschnitten gebildet sein kann, in denen die Ablenkung der Hauptströmungsrichtung nach unten in den beschriebenen Grenzen erzielt wird.

Die Ablenkung der Strömung nach unten erfolgt über einen an die Strömungsabrisskante angrenzenden Leitabschnitt der Strömungsleiteinrichtung. Um die Ablenkung nach unten zu erzielen, ist der Leitabschnitt so gestaltet, dass er in der Fahrzeughöhenrichtung einen für den Luftstrom zur Verfügung stehenden freien Strömungsquerschnitt zur Strömungsabrisskante hin verringert. Die Abmessung des Leitabschnitts in Fahrzeuglängsrichtung kann grundsätzlich beliebig gewählt sein, solange eine ausreichend starke bzw. nachhaltige Beeinflussung der Strömung erzielt wird, die eine entsprechend nach unten geneigte Hauptströmungsrichtung nach der Strömungsabrisskante gewährleistet.

Ist die Strömungsabrisskante in der Fahrzeuglängsrichtung in einem Abrisskantenabstand von dem freien Fahrzeugende entfernt angeordnet, so erstreckt sich der Leitabschnitt bei bevorzugten Varianten des erfindungsgemäßen Wagenkastenmoduls in der Fahrzeuglängsrichtung über wenigstens 10%, vorzugsweise über wenigstens 20%, weiter vorzugsweise über 10% bis 30%, des Abrisskantenabstandes. Hiermit kann eine besonders günstige, nachhaltige Beeinflussung der Strömung erzielt werden.

Während die mit dem Luftstrom zusammenwirkende Strömungsleitoberfläche bei bevorzugten Varianten der Erfindung als eine im Wesentlichen kontinuierliche glatte Oberfläche gestaltet ist, versteht es sich, dass dies nicht notwendigerweise sein muss. Vielmehr kann die Strömungsleitoberfläche mehr oder weniger stark von einer solchen kontinuierlichen und glatten Oberfläche abweichen, beispielsweise (in regelmäßiger oder unregelmäßiger Verteilung) mit Vorsprüngen, Vertiefungen, lokalen Unterbrechungen etc. versehen sein. Maßgeblich ist lediglich, dass die Strömungsleitoberfläche derart gestaltet ist, dass sie eine Einhüllende definiert, deren Verlauf die gewünschte starke bzw. nachhaltige Beeinflussung der Strömung mit sich bringt.

Bei bevorzugten Varianten der Erfindung ist eine Tangente an die Einhüllende im Bereich der Leitoberfläche in einer senkrecht zur Fahrzeugquerrichtung verlaufenden Schnittebene wenigstens um einen ersten Neigungswinkel von wenigstens 3°, vorzugsweise von 3° bis 10°, weiter vorzugsweise von 3° bis 8°, weiter vorzugsweise von 3° bis 6°, zur Fahrzeuglängsrichtung geneigt. Hierdurch wird eine besonders günstige Ablenkung der Strömung nach unten erzielt. Vorzugsweise nimmt der erste Neigungswinkel zur Strömungsabrisskante hin zu, da hiermit eine besonders günstige Beeinflussung der Strömung erzielt werden kann.

In Fahrzeugquerrichtung erstreckt sich der Leitabschnitt bevorzugt über einen ausreichend breiten Abschnitt, um die Ablenkung einer für die gewünschte Reduktion der Schallemission ausreichend großen Luftmenge zu erzielen. Bevorzugt erstreckt sich der Leitabschnitt in der Fahrzeugquerrichtung über wenigstens 80%, vorzugsweise über wenigstens 100%, weiter vorzugsweise über wenigstens 110% bis 120%, einer Spurweite des Fahrwerks.

Die Strömungsabrisskante kann in einem gewissen Abstand von dem Leitabschnitt, beispielsweise an einem separaten Bauteil, ausgebildet sein. Vorzugsweise ist jedoch vorgesehen, dass der Leitabschnitt selbst die Strömungsabrisskante ausbildet. Die Strömungsabrisskante kann dabei wiederum einen beliebigen geeigneten Verlauf (zumindest abschnittsweise geradlinig und/oder zumindest abschnittsweise gekrümmt) aufweisen. Bei besonders einfach gestalteten Varianten der Erfindung ist die Strömungsabrisskante im Wesentlichen geradlinig ausgebildet.

Die Leitoberfläche kann weiterhin grundsätzlich einen beliebigen Verlauf aufweisen. So kann sie beispielsweise zumindest abschnittsweise als einfache ebene Fläche mit einer geradlinigen Schnittkontur (in einer zur Fahrzeugquerrichtung senkrechten Ebene) gestaltet sein. Zusätzlich oder alternativ kann sie aber auch einen zumindest abschnittsweise eine einfach oder mehrfach gekrümmte Gestaltung aufweisen. Insbesondere kann der Leitabschnitt eine im Wesentlichen zylindrische Leitoberfläche oder eine im Wesentlichen ellipsoide Leitoberfläche oder eine im Wesentlichen hyperboloide Leitoberfläche aufweisen.

Weiterhin kann die Leitoberfläche in einer Schnittebene senkrecht zur Fahrzeuglängsrichtung eine im Wesentlichen konvexe erste Schnittkontur aufweisen und in einer Schnittebene senkrecht zur Fahrzeugquerrichtung eine im Wesentlichen konkave zweite Schnittkontur aufweisen. Hiermit lässt sich eine besonders günstige Anpassung an die Geometrie von Fahrzeugen für den Hochgeschwindigkeitsverkehr erzielen, die sich zur Fahrzeugspitze hin stark verjüngen.

Insbesondere im Hochgeschwindigkeitsverkehr ist es wünschenswert, den Wagenkasten möglichst nahe an der Fahrzeugspitze möglichst weit nach unten an die Konstruktionsgrenzhülle heranzuziehen, die für die von dem Fahrzeug zu befahrenden Strecken vorgegeben ist. Insbesondere im Bereich der Längsmittenebene fällt dieses Tiefziehen der Nasenspitze bevorzugt stärker aus als weiter seitlich. Hierdurch soll in der Regel erreicht werden, dass ein möglichst großer Anteil der anströmenden Luft seitlich verdrängt wird, und daher nicht unter das Fahrzeug gelangt, wo er wegen der zerklüfteten Gestaltung im Fahrwerksbereich zu den beschriebenen akustischen Problemen führen kann. Ein weiterer Vorteil dieses Ansatzes liegt in der Reduktion des aerodynamischen Widerstands des Fahrzeugs sowie der Reduktion der aerodynamischen Belastungen des Fahrwegs. Diese aerodynamischen Belastungen des Fahrwegs können zu so genanntem Schotterflug führen, bei dem Objekte im Gleisbett, wie unter anderem der verwendete Schotter, aufgewirbelt werden und sowohl das Fahrzeug als auch die Umgebung (Infrastruktur oder schlimmstenfalls sogar Passanten) schädigen können.

Diese vorteilhafte Gestaltung einer möglichst nahe an die Konstruktionsgrenzhülle heranreichenden Außenhaut des Wagenkastens wird bei der Erfindung im besonders vorteilhafter Weise mit der Ablenkung der Strömung nach unten vereint, indem die Strömungsleiteinrichtung einen dem Leitabschnitt vorgelagerten Diffusorabschnitt aufweist, der sich zwischen dem freien Fahrzeugende und dem Leitabschnitt erstreckt und in der Fahrzeughöhenrichtung einen für den Luftstrom zur Verfügung stehenden freien Strömungsquerschnitt zur Strömungsabrisskante hin erhöht.

Diese über den Diffusorabschnitt erzielte Aufweitung Strömungsquerschnittes ermöglicht es, die unter das Fahrzeug gelangende Strömung zunächst über den Diffusorabschnitt nach oben zu lenken, um sie dann durch den Leitabschnitt wieder nach unten lenken zu können, wodurch die gewünschte Ablenkung der Scherschicht hinter der Strömungsabrisskante zu erzielt wird. Hiermit ist es insbesondere möglich, sowohl die vor den Diffusorabschnitt liegende Außenhaut an der Fahrzeugspitze als auch die Strömungsabrisskante unmittelbar an die Konstruktionsgrenzhülle heranzuführen und somit die überhaupt in den Bereich des Fahrwerksausschnitts gelangende Luftmenge zu reduzieren.

Auch der Diffusorabschnitt kann wiederum eine beliebige geeignete Länge aufweisen, solange die oben beschriebene Leitfunktion erzielt wird. Bevorzugt erstreckt sich der Diffusorabschnitt in der Fahrzeuglängsrichtung über wenigstens 15%, vorzugsweise über wenigstens 25%, weiter vorzugsweise über 15% bis 45%, des Abrisskantenabstandes, da hiermit ein besonders vorteilhaftes Leitverhalten erzielt werden kann.

Hinsichtlich der Gestaltung der mit der Luftströmung zusammenwirkenden Diffusoroberfläche des Diffusorabschnitts gelten grundsätzlich dieselben Aussagen, wie sie oben für die Leitoberfläche getroffen wurden. Vorzugsweise ist die Diffusoroberfläche so gestaltet, dass eine Tangente an die Einhüllende im Bereich der Diffusoroberfläche in einer senkrecht zur Fahrzeugquerrichtung verlaufenden Schnittebene um einen ersten Neigungswinkel von wenigstens 1°, vorzugsweise von 2° bis 7°, weiter vorzugsweise von 3° bis 5°, zur Fahrzeuglängsrichtung geneigt ist.

Auch in Fahrzeugquerrichtung kann wiederum eine beliebige geeignete Ausdehnung des Diffusorabschnitts vorgesehen sein. Insbesondere bei entsprechend breiter Kopfgestaltung können Breiten des Diffusors bis über 120% der Spurweite vorgesehen sein. Bevorzugt erstreckt sich der Diffusorabschnitt in der Fahrzeugquerrichtung über wenigstens 20%, vorzugsweise über wenigstens 30%, weiter vorzugsweise über 20 % bis 40%, einer Spurweite des Fahrwerks, da hiermit eine besonders vorteilhafte Gestaltung erzielt wird.

Vorzugsweise weist auch der Diffusorabschnitt eine im Wesentlichen glatte Oberfläche auf. Auch der Diffusorabschnitt weist weiterhin bevorzugt eine mindestens einfach gekrümmte, insbesondere eine im Wesentlichen zylindrische Oberfläche, oder eine zweifach gekrümmte Oberfläche, insbesondere eine im Wesentlichen ellipsoide oder hyperboloide Oberfläche, auf.

Eine im Hinblick auf die störungsfreie Leitung der Strömung vorteilhafte Gestaltung ergibt sich, wenn der Diffusorabschnitt eine Diffusoroberfläche aufweist, die in einer Schnittebene senkrecht zur Fahrzeuglängsrichtung eine im Wesentlichen konvexe dritte Schnittkontur aufweist und in einer Schnittebene senkrecht zur Fahrzeugquerrichtung eine vierte Schnittkontur mit einem Wendepunkt aufweist.

Bevorzugte Gestaltungen weisen zwischen dem Diffusorabschnitt und dem Leitabschnitt einen Übergangsabschnitt der Strömungsleiteinrichtung auf, in dessen Bereich eine Tangente an die Einhüllende in einer senkrecht zur Fahrzeugquerrichtung verlaufenden Schnittebene ihre Neigung zur Fahrzeuglängsrichtung insbesondere kontinuierlich ändert. Zusätzlich oder alternativ kann ein dem Diffusorabschnitt vorgelagerter Einlaufabschnitt der Strömungsleiteinrichtung vorgesehen sein, in dessen Bereich eine Tangente an die Einhüllende in einer senkrecht zur Fahrzeugquerrichtung verlaufenden Schnittebene ihre Neigung zur Fahrzeuglängsrichtung zu einem Wert Null hin, insbesondere kontinuierlich, ändert. Beide Abschnitte sind im Hinblick auf die störungsfreie Leitung der Strömung von Vorteil.

Ist für den Wagenkasten die bereits beschriebene Konstruktionsgrenzhülle vorgegeben, welche der Wagenkasten einzuhalten hat, so ist bevorzugt ein dem Diffusorabschnitt vorgelagerter Einlaufabschnitt der Strömungsleiteinrichtung vorgesehen, der zumindest in der Fahrzeughöhenrichtung im Wesentlichen bis an die Konstruktionsgrenzhülle heranreicht, um die oben beschriebene möglichst weit gehende seitliche Verdrängung der anströmenden Luft zu erzielen.

Bei weiteren vorteilhaften Gestaltungen des erfindungsgemäßen Wagenkastenmoduls ist die Strömungsleiteinrichtung dazu ausgebildet, an der Unterseite des Wagenkastens zwischen einem der Strömungsabrisskante vorgelagerten Einlaufabschnitt und der Strömungsabrisskante eine leichte Einbuchtung in einer Außenhaut des Wagenkastens auszubilden. Hierbei weist die Strömungsleiteinrichtung eine mit dem Luftstrom zusammenwirkende Strömungsleitoberfläche auf, die eine Einhüllende definiert, wobei die Einhüllende den über einen Querbereich in einer senkrecht zur Fahrzeugquerrichtung verlaufenden Schnittebene eine im Wesentlichen S-förmige Schnittkontur aufweist. Hiermit lässt sich die oben beschriebene vorteilhafte Leitung des Luftstroms unter dem Fahrzeug ebenfalls realisieren.

Vorzugsweise erstreckt sich der Querbereich in der Fahrzeugquerrichtung über wenigstens 50%, vorzugsweise über wenigstens 80%, weiter vorzugsweise über 100%, einer Spurweite des Fahrwerks, da hiermit eine besonders günstige Beeinflussung eines ausreichend großen Teils der Scherschicht erzielt werden kann.

Ist die Strömungsabrisskante in der Fahrzeuglängsrichtung in einem Abrisskantenabstand von dem freien Fahrzeugende entfernt angeordnet, so erstreckt sich der Einlaufabschnitt in der Fahrzeuglängsrichtung bevorzugt zusätzlich oder alternativ bis zu einer Entfernung von 35% bis 65% des Abrisskantenabstands, vorzugsweise von 40% bis 60% des Abrisskantenabstands, weiter vorzugsweise von 45% bis 55% des Abrisskantenabstands, von dem freien Fahrzeugende entfernt angeordnet.

Ist für den Wagenkasten wiederum die beschriebene Konstruktionsgrenzhülle vorgegeben, welche der Wagenkasten einzuhalten hat, während das freie Fahrzeugende eine in der Fahrzeughöhenrichtung eine maximalen Fahrzeugspitzenhöhe (also der Höhe des vordersten Punktes des Kopfabschnitts) über der Konstruktionsgrenzhülle aufweist, so erstreckt sich der Einlaufabschnitt in der Fahrzeuglängsrichtung zusätzlich oder alternativ bevorzugt bis zu einer Entfernung von 150% bis 300% der Fahrzeugspitzenhöhe, vorzugsweise von 175% bis 275% der Fahrzeugspitzenhöhe, weiter vorzugsweise von 200% bis 250% der Fahrzeugspitzenhöhe, von dem freien Fahrzeugende. Hiermit wird eine hinsichtlich der weit gehenden seitlichen Verdrängung der anströmenden Luft optimierte Gestaltung erzielt.

Bei bevorzugten Varianten des erfindungsgemäßen Wagenkastenmoduls reicht der Einlaufabschnitt wie erwähnt zumindest in der Fahrzeughöhenrichtung im Wesentlichen bis an die Konstruktionsgrenzhülle heran. Zusätzlich oder alternativ kann der Einlaufabschnitt im Bereich eines im Wesentlichen domartigen Vorsprungs an der Unterseite des Wagenkastens ausgebildet sein, um auf besonders einfache Weise eine frühzeitige seitliche Verdrängung der anströmenden Luft zu erzielen.

Wie bereits oben erwähnt wurde, ist die Strömungsabrisskante bevorzugt im Wesentlichen geradlinig ausgebildet. Zusätzlich oder alternativ kann die Strömungsabrisskante zumindest in der Fahrzeughöhenrichtung im Wesentlichen bis an die Konstruktionsgrenzhülle heranreichen.

Bei bevorzugten Varianten des erfindungsgemäßen Wagenkastenmoduls sind im Bereich der Strömungsabrisskante eine Mehrzahl von Turbulatorelementen zur Einbringung von Verwirbelungen in die sich nach einem Strömungsabriss an der Strömungsabrisskante ausbildende Scherschicht vorgesehen. Hiermit wird der eingangs beschriebene Vorteil der Vermeidung von Geräuschemissionen durch die periodische Bildung von Wirbeln innerhalb der Scherschicht erzielt. Ein weiterer Vorteil liegt in der Vermeidung der periodischen Bildung von ausgeprägten Wirbeln und der damit einhergehenden Reduktion bzw. Vermeidung von Lastspitzen der auf das Gleis wirkenden aerodynamischen Lasten. Das bereits erwähnte Problem des Schotterfluges kann hierdurch wirkungsvoll reduziert werden.

Die Turbulatorelemente können grundsätzlich auf beliebige geeignete Weise gestaltet sein. Insbesondere kann wenigstens eines der Turbulatorelemente als finnenartiger Vorsprung an der Unterseite des Wagenkastens ausgebildet sein. Das Turbulatorelement kann dabei eine beliebige Ausrichtung zur Fahrzeuglängsrichtung aufweisen. Vorzugsweise ist das Turbulatorelement zur Fahrzeuglängsrichtung geneigt angeordnet ist. Dies hat den Vorteil, dass die auf diese Weise in die Scherschicht eingebrachte Störung primär in Fahrzeugquerrichtung wirken kann, wodurch Längswirbei mit annähernd in Fahrzeuglängsrichtung verlaufender Drehachse entstehen, die zu keiner unerwünschten durch die Turbulatorelemente bedingten verstärkten Aufweitung der Scherschicht in Fahrzeughöhenrichtung führen.

Vorzugsweise ist wenigstens eines der Turbulatorelemente dazu ausgebildet, den darauf auftreffenden Teil des Luftstroms in der Fahrzeugquerrichtung von einer Länsgmittenebene des Wagenkastens wegzulenken, da hiermit eine besonders günstige Einleitung der Turbulenz in die Scherschicht erzielt wird.

Es sei an dieser Stelle angemerkt, dass eine derart zur Hauptströmungsrichtung geneigte Anordnung des Turbulatorelements, die keine nennenswerte Aufweitung der Scherschicht mit sich bringt, einen von der Ablenkung der Scherschicht nach unten unabhängigen, eigenständig schutzfähigen Erfindungsgedanken darstellt.

Die vorliegende Erfindung betrifft weiterhin einen Wagenkasten mit einem erfindungsgemäßen Wagenkastenmodul. Das erfindungsgemäße Wagenkastenmodul kann dabei als separates Modul gestaltet sein, welches auch nachträglich an einem Wagenkasten montiert werden kann. In diesem Fall eignet es sich insbesondere als Nachrüstlösung für bereits bestehende Fahrzeuge, die bisher eine herkömmliche Gestaltung mit einer parallel zur Fahrzeuglängsachse verlaufenden Unterseite des Wagenkastens aufweisen.

Es versteht sich jedoch, dass das Wagenkastenmodul bei anderen Varianten der Erfindung auch beispielsweise ein komplettes Kopfmodul eines Wagenkastens sowie gegebenenfalls auch den kompletten Wagenkasten bilden kann.

Die Strömungsleiteinrichtung ist an einer Unterseite des Wagenkastens zwischen dem freien Fahrzeugende und dem vorlaufenden Ende des Fahrwerksausschnitts angeordnet. Die Strömungsleiteinrichtung ist dazu ausgebildet, im Betrieb des Fahrzeugs einen die Unterseite des Wagenkastens vom freien Fahrzeugende zum Fahrwerksausschnitt hin überstreichenden Luftstrom zu beeinflussen. Die Strömungsleiteinrichtung ist weiterhin dazu ausgebildet, dem Luftstrom im Bereich einer Strömungsabrisskante an dem vorlaufenden Ende des Fahrwerksausschnitts über einen Ablenkungsbereich eine nach unten gerichtete Hauptströmungsrichtung aufzuprägen, wobei die Hauptströmungsrichtung derart nach unten geneigt ist, dass eine sich nach einem Strömungsabriss an der Strömungsabrisskante ausbildende Scherschicht, deren lokale Höhenerstreckung sich durch eine Aufweitung im Strömungsverlauf in Fahrzeughöhenrichtung erhöht, insbesondere bei der Nennbetriebsgeschwindigkeit, über höchstens 40% bis 50% der lokalen Höhenerstreckung, vorzugsweise höchstens 20% der lokalen Höhenerstreckung, weiter vorzugsweise höchstens 10% der lokalen Höhenerstreckung, auf das Fahrwerk auftrifft. Zusätzlich oder alternativ ist die Hauptströmungsrichtung derart nach unten geneigt, dass die Scherschicht über höchstens 40% bis 50% der lokalen Höhenerstreckung, vorzugsweise höchstens 20% der lokalen Höhenerstreckung, weiter vorzugsweise höchstens 10% der lokalen Höhenerstreckung, auf das nachlaufende Ende des Fahrwerksausschnitts auftrifft. Auch hiermit lassen sich die oben beschriebenen Varianten und Vorteile in demselben Maße realisieren, so dass diesbezüglich lediglich auf die obigen Ausführungen verwiesen wird.

Die vorliegende Erfindung betrifft schließlich noch ein Fahrzeug mit einem erfindungsgemäßen Wagenkasten. Hierbei kann es sich um ein beliebiges Fahrzeug mit einer beliebig hohen Nennbetriebsgeschwindigkeit handeln. Besonders vorteilhaft lässt sich die vorliegende Erfindung bei einem Fahrzeug für den Hochgeschwindigkeitsverkehr mit einer Nennbetriebsgeschwindigkeit oberhalb von 250 km/h, insbesondere oberhalb von 300 km/h, einsetzen.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:
- Figur 1: eine schematische perspektivische Ansicht eines Teils einer bevorzugten Ausführungsform des erfindungsgemäßen Fahrzeugs;
- Figur 2: eine schematische Seitenansicht des Fahrzeugs aus Figur 1;
- Figur 3: eine schematische Frontansicht des Fahrzeugs aus Figur 1;
- Figur 4: den Verlauf der z-Koordinate der Außenhaut des Fahrzeugs aus Figur 1 in der Längsmittenebene (xz-Ebene);
- Figur 5: eine schematische Schnittansicht eines Teils der Außenhaut des Fahrzeugs im Bereich der Fahrzeugspitze entlang Linie V-V aus Figur 3;
- Figur 6: eine schematische Schnittansicht eines Teils der Außenhaut des Fahrzeugs im Bereich der Fahrzeugspitze entlang Linie VI-VI aus Figur 3;
- Figur 7: eine schematische Schnittansicht eines Teils der Außenhaut des Fahrzeugs im Bereich der Fahrzeugspitze entlang Linie VII-VII aus Figur 3;
- Figur 8: eine schematische Schnittansicht eines Teils der Außenhaut des Fahrzeugs im Bereich der Fahrzeugspitze entlang Linie VIII-VIII aus Figur 3;
- Figur 9: eine schematische perspektivische Ansicht der Außenhaut des Fahrzeugs aus Figur 1 im Bereich der Fahrzeugspitze von unten;
- Figur 10: eine schematische Schnittansicht eines Teils der Außenhaut des Fahrzeugs im Bereich der Fahrzeugspitze entlang Linie X-X aus Figur 9;
- Figur 11: eine schematische Schnittansicht eines Teils der Außenhaut des Fahrzeugs im Bereich der Fahrzeugspitze entlang Linie XI-XI aus Figur 9;
- Figur 12: eine schematische Schnittansicht eines Teils der Außenhaut des Fahrzeugs im Bereich der Fahrzeugspitze entlang Linie XII-XII aus Figur 9.

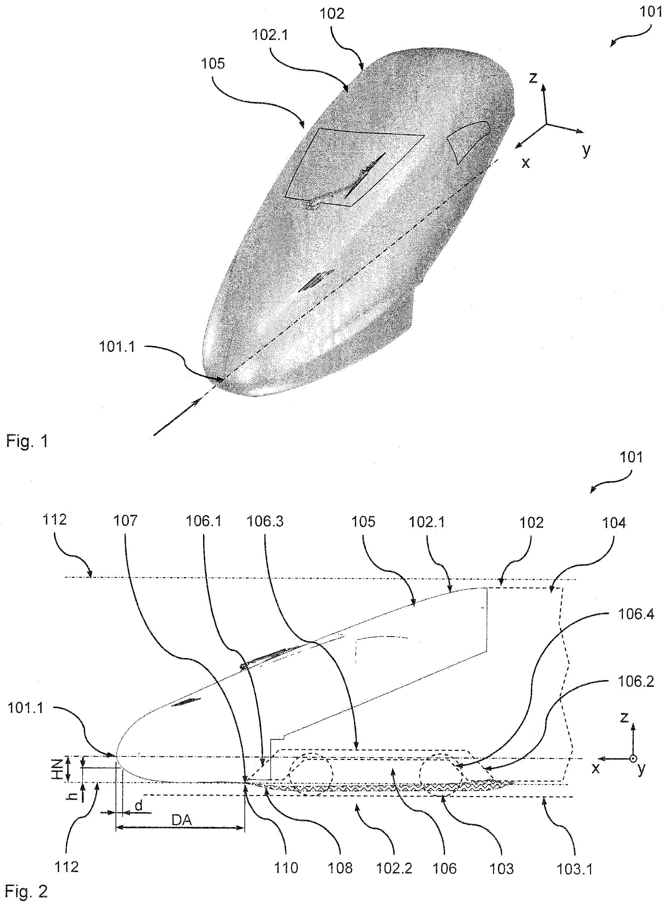

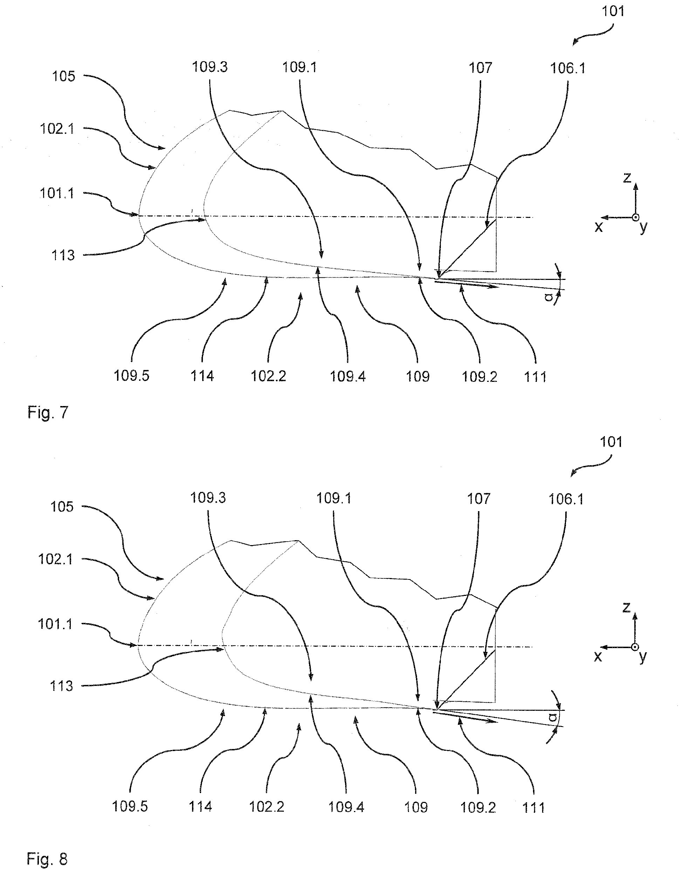

Im Folgenden wird unter Bezugnahme auf die Figuren 1 bis 12 ein bevorzugtes Ausführungsbeispiel des erfindungsgemäßen Fahrzeugs in Form eines Schienenfahrzeugs 101 beschrieben. Bei dem Schienenfahrzeug 101 handelt es sich um einen Endwagen eines Triebzugs für den Hochgeschwindigkeitsverkehr, dessen Nennbetriebsgeschwindigkeit oberhalb von 250 km/h, nämlich bei Vₙ = 300 km/h, liegt.

Es sei an dieser Stelle angemerkt, dass die nachfolgenden Ausführungen für einen Strömungszustand bei Fahrt des Fahrzeugs 101 mit konstanter Geschwindigkeit im geraden ebenen Gleis ohne die Einflüsse von Seitenwind oder dergleichen gemacht werden, sofern keine expliziten anderweitigen Angaben gemacht werden. Es versteht sich, dass sich bei einer Abweichung von diesem Betriebszustand (beispielsweise infolge einer Kurvenfahrt oder von Seitenwind etc.) Abweichungen von den beschriebenen Strömungsverhältnissen, insbesondere den Strömungsrichtungen ergeben können, wobei jedoch die grundsätzlichen Feststellungen im Wesentlichen weiterhin gelten.

Das Fahrzeug 101 umfasst einen Wagenkasten 102, der eine Außenhaut 102.1 des Fahrzeugs 101 definiert. Der Wagenkasten 102 ist im Bereich seiner beiden Enden in herkömmlicher Weise jeweils auf einem Fahrwerk in Form eines Drehgestells 103 abgestützt. Es versteht sich jedoch, dass die vorliegende Erfindung auch in Verbindung mit anderen Konfigurationen eingesetzt werden kann, bei denen der Wagenkasten lediglich auf einem Fahrwerk abgestützt ist.

Zum einfacheren Verständnis der nachfolgenden Erläuterungen ist in den Figuren ein (durch die Radaufstandsebene 103.1 des Drehgestells 103 vorgegebenes) Fahrzeug-Koordinatensystem x,y,z angegeben, in dem die x-Koordinate die Längsrichtung des Schienenfahrzeugs 101, die y-Koordinate die Querrichtung des Schienenfahrzeugs 101 und die z-Koordinate die Höhenrichtung des Schienenfahrzeugs 101 bezeichnen.

Der Wagenkasten 102 weist einen Rumpfabschnitt 104 und ein daran anschließendes bevorzugtes Ausführungsbeispiel des erfindungsgemäßen Wagenkastenmoduls in Form eines Kopfabschnitts 105 auf. Der Rumpfabschnitt 104 weist (abgesehen von lokalen Ausschnitten für funktionale Komponenten des Fahrzeugs, wie beispielsweise Stromabnehmer, Dachcontainer etc.) eine im Wesentlichen prismatische Gestaltung (mit entlang der Fahrzeuglängsrichtung im Wesentlichen identischen Schnittkonturen der Außenhaut 102.1) auf. Demgegenüber verjüngt sich der Kopfabschnitt 105 sowohl in Fahrzeughöhenrichtung als auch in Fahrzeugquerrichtung zum Ende des Fahrzeugs 101 hin, sodass er im Betrieb des Fahrzeugs 101 ein freies Fahrzeugende des Fahrzeugs 101 bilden kann. Dabei ist in dem Kopfabschnitt 105 ein Abteil für den Fahrzeugführer vorgesehen, von dem aus der Fahrzeugführer das Fahrzeug 101 steuert, wenn der Kopfabschnitt 105 in einem Normalbetrieb des Fahrzeugs 101 das vorlaufende Ende 101.1 des Fahrzeugs 101 bildet (also die Fahrtrichtung in Richtung der positiven x-Achse weist, wovon im Folgenden ausgegangen wird, soweit keine expliziten anderweitigen Angaben gemacht werden).

Das Drehgestell 103 ist in einem Fahrwerksausschnitt 106 des Wagenkastens 102 angeordnet, der an seinem vorlaufenden Ende durch eine vorlaufende Wand 106.1 und an seinem nachlaufenden Ende durch eine nachlaufende Wand 106.2 begrenzt ist, die durch eine obere Wand 106.3 miteinander verbunden sind. Zu beiden Fahrwerksseiten wird der Fahrwerksausschnitt 106 durch Schürzen 106.4 begrenzt.

Das untere Ende der vorlaufenden Wand 106.1 bildet in diesem Betriebsmodus eine Strömungsabrisskante 107 aus, an der sich der (die Unterseite 102.2 des Wagenkastens 102 vom freien Fahrzeugende zum Fahrwerksausschnitt 106 hin überstreichende) Luftstrom von der Außenhaut 102.1 des Wagenkastens 102 ablöst. Die Strömungsabrisskante 107 ist dabei in der Fahrzeuglängsrichtung in einem Abrisskantenabstand DA von dem freien Fahrzeugende 101.1 entfernt angeordnet (siehe Figur 2).

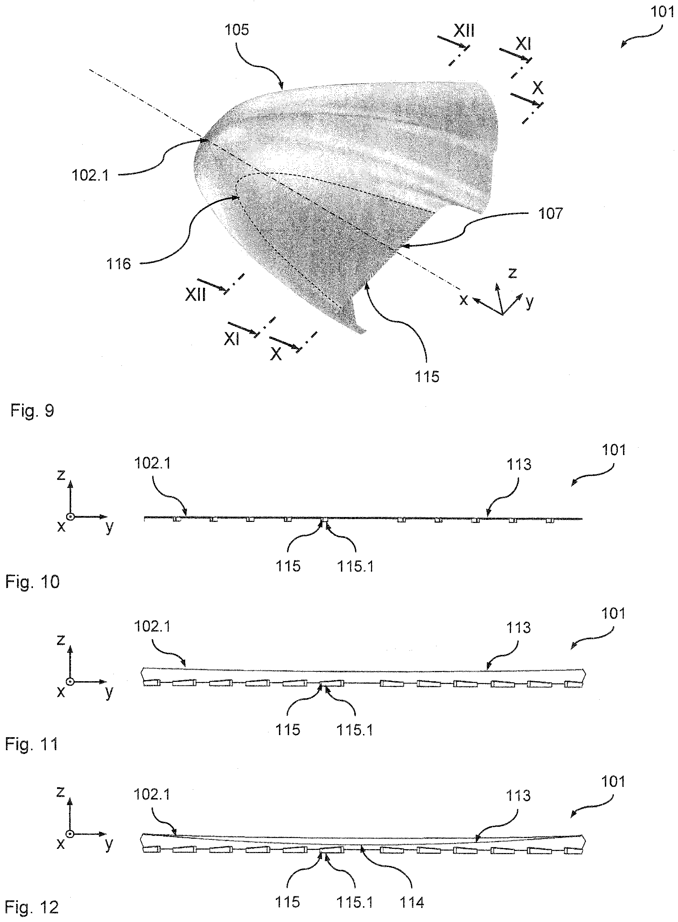

Die Strömungsabrisskante 107 ist im vorliegenden Beispiel im Wesentlichen geradlinig ausgebildet (siehe insbesondere Figur 9). Es versteht sich jedoch, dass die Strömungsabrisskante bei anderen Varianten der Erfindung einen beliebigen geeigneten Verlauf (z. B. zumindest abschnittsweise geradlinig und/oder zumindest abschnittsweise gekrümmt) aufweisen kann.

Nach dem Ablösen des Luftstroms bildet sich infolge der unterschiedlichen Strömungsgeschwindigkeiten im dem Fahrwerksausschnitt 106 und dem darunter liegenden Zwischenraum zum Gleisbett eine so genannte Scherschicht 108 aus. Die Strömungsverhältnisse innerhalb der Scherschicht 108 sind wegen der Geschwindigkeitsunterschiede stark instabil, sodass es neben einem Aufweiten der Scherschicht 108 in Fahrzeughöhenrichtung (z-Richtung) im weiteren Strömungsverlauf zu einem periodischen Aufrollen von Wirbeln kommt.

Diese periodische Wirbelbildung bedingt bei herkömmlichen Fahrzeugen eine wesentliche Schallemission in diesem Fahrzeugbereich. Verstärkt wird dies noch durch das Auftreffen dieser Wirbel auf nachlaufende Fahrzeugkomponenten, insbesondere Komponenten des Drehgestells und der nachlaufenden Wand des Fahrwerksausschnitts. Diese Komponenten werden hierdurch zu Schwingungen und damit ebenfalls zur Schallemission angeregt.

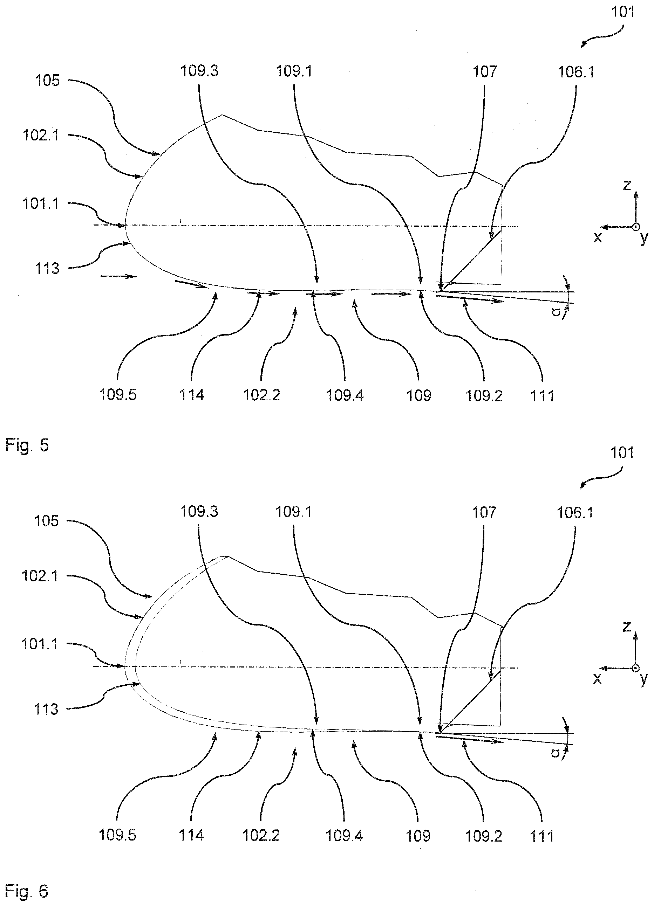

Um diese Schallemission zu reduzieren weist das Kopfmodul 105 auf seiner Unterseite in der Fahrzeuglängsrichtung zwischen dem freien Fahrzeugende 101.1 und der Strömungsabrisskante 107 eine Strömungsleiteinrichtung 109 auf. Die Strömungsleiteinrichtung 109 prägt dem Luftstrom im Bereich der Strömungsabrisskante 107 über einen Ablenkungsbereich 110 eine nach unten gerichtete Hauptströmungsrichtung 111 auf, die um einen Winkel α = 6° zur Fahrzeuglängsrichtung geneigt ist (siehe insbesondere Figur 5), wobei Winkelabweichungen von bis zu ± 1° möglich sind.

Bei weiteren bevorzugten Varianten der Erfindung wird dem Luftstrom im Bereich der Strömungsabrisskante 107 über einen Ablenkungsbereich 110 eine nach unten gerichtete Hauptströmungsrichtung 111 aufgeprägt, die um einen Winkel α = 9° zur Fahrzeuglängsrichtung geneigt ist (siehe insbesondere Figur 5), wobei Winkelabweichungen von bis zu ± 1 möglich, sind.

Wie den Figuren 5 bis 8 zu entnehmen ist, liegt in die Winkelabfenkung der Hauptströmungsrichtung 111 in dem Ablenkungsbereich 110 über die Spurweite W (mit den genannten Toleranzen) bei α = 6°. Erst in dem Randbereich außerhalb der Spurweite erhöht sich der Ablenkungswinkel der Hauptströmungsrichtung 111 leicht auf etwa 8°. Bei der Variante mit dem einen Winkel α = 9° bleibt der Winkel über die Breite B im Wesentlichen konstant.

Hierdurch wird in vorteilhafter Weise erreicht, dass auch die Scherschicht 108 nach unten abgelenkt wird (siehe Figur 2) und somit, sofern überhaupt, bei der Nennbetriebsgeschwindigkeit des Fahrzeugs 101, über höchstens 10% ihrer lokalen Höhenerstreckung auf das Drehgestell 103 auftrifft. Im weiteren Strömungsverlauf wird hierdurch erreicht, dass die Scherschicht 108 über höchstens 20% ihrer lokalen Höhenerstreckung, auf die nachlaufende Wand 106.2 des Fahrwerksausschnitts 106 auftrifft. Beide Effekte bewirken die erwähnte Reduktion der Schwingungsanregung dieser Fahrzeugkomponenten und der hierdurch induzierten Schallemission.

Es versteht sich, dass die Ablenkung der Hauptströmungsrichtung 111 nach unten grundsätzlich beliebig groß gewählt werden kann, um den beschriebenen Effekt zu erzielen. Insbesondere kann der Winkel α über die Fahrzeugbreite (also in Fahrzeugquerrichtung) variieren, um eine entsprechende Abstimmung bzw. Anpassung hinsichtlich der nachfolgenden Fahrzeugkomponenten zu erzielen. Besonders günstig ist es jedoch, wenn die Strömung nicht zu weit nach unten in Richtung des Gleisbettes abgelenkt wird, um ungünstige Effekte, wie beispielsweise eine Erhöhung des Strömungswiderstandes, das Auslösen von Schotterflug etc., soweit als möglich zu vermeiden.

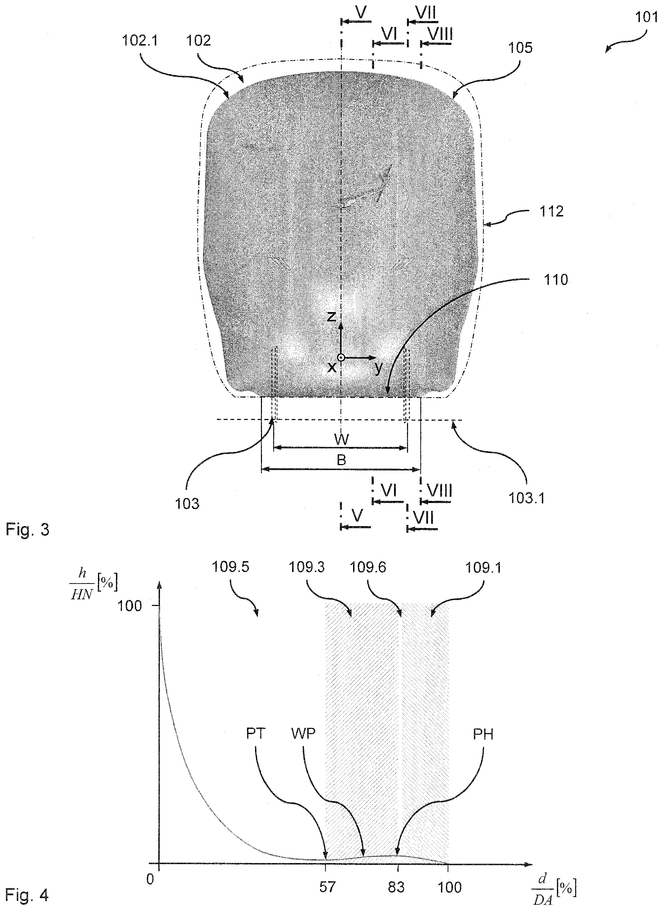

Der Ablenkungsbereich 110 erstreckt sich in Fahrzeugquerrichtung über die gesamte Breite der Strömungsabrisskante 107. Wie Figur 3 zu entnehmen ist, erstrecken sich die Strömungsabrisskante 107 bzw. der Ablenkungsbereich 110 über eine Breitenabmessung B, die etwa 110% der Spurweite W des Drehgestells 103 entspricht.

Hierbei versteht es sich, dass sich der Ablenkungsbereich 110 bei anderen Varianten der Erfindung in der Fahrzeugquerrichtung grundsätzlich über einen beliebigen, ausreichend großen Abschnitt des Wagenkastens erstrecken kann. Von besonderer Bedeutung ist dabei die Ablenkung im Bereich der Fahrzeugmitte. Bevorzugt erstreckt sich der Ablenkungsbereich ausgehend von der Fahrzeugmitte zu beiden Seiten in der Fahrzeugquerrichtung über 20% bis 40% der Spurweite W.

Die Ablenkung des Luftstroms nach unten erfolgt über einen Leitabschnitt 109.1 der Strömungsleiteinrichtung 109, der die Strömungsabrisskante 107 ausbildet und somit unmittelbar an Strömungsabrisskante 107 angrenzt. Um die Ablenkung nach unten zu erzielen, ist der Leitabschnitt 109.1 so gestaltet, dass er in der Fahrzeughöhenrichtung einen für den Luftstrom zur Verfügung stehenden freien Strömungsquerschnitt zur Strömungsabrisskante 107 hin verringert, wie dies insbesondere der Figur 4 zu entnehmen ist.

Die Figur 4 stellt dabei den Verlauf der (auf die Nasenspitzenhöhe HN bezogenen) Höhe h der Schnittkontur der Außenhaut 102.1 über der Konstruktionsgrenzhülle 112 in der Fahrzeuglängsmittenebene (Schnittebene V-V aus Figur 3) in Abhängigkeit vom (auf den Abrisskantenabstand DA bezogenen) Abstand d vom freien Fahrzeugende 101.1 dar. Die Konstruktionsgrenzhülle 112 bezeichnet dabei die Hüllfläche, über welche der Wagenkasten 102 (bei im geraden, ebenen Gleis stehenden Fahrzeug 101) nicht durchdringen darf. Diese Konstruktionsgrenzhülle 112 ist in der Regel durch die von dem Fahrzeug zu befahrenden Strecken vorgegeben.

Wie Figur 4 zu entnehmen ist, erstreckt sich der Leitabschnitt 109.1 im vorliegenden Beispiel in der Fahrzeuglängsrichtung über etwa 15% des Abrisskantenabstandes DA, um eine ausreichend starke bzw. nachhaltige Beeinflussung des Luftstroms zu erzielen. Es versteht sich jedoch, dass die Abmessung des Leitabschnitts in Fahrzeuglängsrichtung grundsätzlich beliebig gewählt sein kann, solange eine ausreichend starke bzw. nachhaltige Beeinflussung der Strömung erzielt wird, die eine entsprechend nach unten geneigte Hauptströmungsrichtung 111 nach der Strömungsabrisskante 107 gewährleistet.

Im vorliegenden Beispiel ist die mit dem Luftstrom zusammenwirkende Strömungsleitoberfläche 109.2 des Leitabschnitts 109.1 als eine im Wesentlichen kontinuierliche glatte Oberfläche gestaltet, wobei die Tangente an die Strömungsleitoberfläche 109.2 im Punkt 107 in der Schnittansicht aus Figur 5 unter einem ersten Neigungswinkel α = 6° zur Fahrzeuglängsrichtung geneigt ist. Im vorliegenden Beispiel nimmt der erste Neigungswinkel α ausgehend von einem Wert von α = 3° (zu Beginn des Leitabschnitts 109.1) in Strömungsrichtung zur Strömungsabrisskante 107 hin kontinuierlich zu, da hiermit eine besonders günstige Beeinflussung der Strömung mit der beschriebenen nach unten gerichteten Ablenkung der Hauptströmungsrichtung 111 um α = 6° erzielt werden kann.

Bei weiteren bevorzugten Varianten der Erfindung ist die Tangente an die Strömungsleitoberfläche 109.2 im Punkt 107 in der Schnittansicht aus Figur 5 unter einem ersten Neigungswinkel α = 9° zur Fahrzeuglängsrichtung geneigt, wobei auch hier Winkelabweichungen von bis zu ± 1 möglich, sind.

Es versteht sich jedoch, dass bei anderen Varianten auch ein beliebiger anderweitiger Verlauf des Neigungswinkels über den Leitabschnitt vorgesehen sein kann. Insbesondere kann zumindest abschnittsweise ein progressiver und/oder degressiver Verlauf des Neigungswinkels vorgesehen sein. Zusätzlich oder alternativ kann zumindest abschnittsweise auch ein konstanter Neigungswinkel vorgesehen sein.

Es versteht sich weiterhin, dass der Leitabschnitt nicht notwendigerweise eine ununterbrochene, glatte Oberfläche aufweisen muss. Vielmehr kann die Strömungsleitoberfläche mehr oder weniger stark von einer solchen kontinuierlichen und glatten Oberfläche abweichen, beispielsweise (in regelmäßiger oder unregelmäßiger Verteilung) mit Vorsprüngen, Vertiefungen, lokalen Unterbrechungen etc. versehen sein. Maßgeblich ist lediglich, dass die Strömungsleitoberfläche derart gestaltet ist, dass sie eine entsprechender Einhüllende definiert und die gewünschte starke bzw. nachhaltige Beeinflussung der Strömung mit sich bringt.

Die Leitoberfläche kann bei weiteren Varianten der Erfindung grundsätzlich einen beliebigen Verlauf aufweisen. So kann sie beispielsweise zumindest abschnittsweise als einfache ebene Fläche mit einer geradlinigen Schnittkontur (in einer zur Fahrzeugquerrichtung senkrechten Ebene) gestaltet sein. Zusätzlich oder alternativ kann sie aber auch einen zumindest abschnittsweise eine einfach oder mehrfach gekrümmte Gestaltung aufweisen.

Wie sich unter anderem aus den in den Figuren 5 bis 8 und 10 bis 12 dargestellten Schnitten der Außenhaut 102.1 ergibt (siehe auch Figur 3 und 9), weist die Strömungsleitoberfläche 109.2 in einer Schnittebene senkrecht zur Fahrzeuglängsrichtung eine im Wesentlichen konvexe erste Schnittkontur 113 auf, während sie und in einer Schnittebene senkrecht zur Fahrzeugquerrichtung eine im Wesentlichen konkave zweite Schnittkontur 113 aufweist. Hiermit wird eine besonders günstige Anpassung an die schlanke, langgestreckte Geometrie des Fahrzeugkopfs erzielt.

Um einen möglichst großen Teil der anströmenden Luft seitlich zu verdrängen und somit zu erreichen, dass er nicht unter das Fahrzeug gelangt (wo er wegen der zerklüfteten Gestaltung im Bereich des Drehgestells 103 zu den beschriebenen akustischen Problemen führen kann) ist die Außenhaut 102.1 auf der Fahrzeugunterseite in einem der Strömungsabrisskante 107 vorlaufenden domartigen Abschnitt 114 bis nahe an die Konstruktionsgrenzhülle 112 herangezogen. Wie insbesondere der Figur 4 zu entnehmen ist, liegt der tiefste Punkt PT der Außenhaut 102.1 in der Fahrzeuglängsrichtung etwa mittig zwischen der Fahrzeugspitze 101.1 und der Strömungsabrisskante 107, nämlich in einer Entfernung von etwa 57% des Abrisskantenabstands von der Fahrzeugspitze 101.1.

Es versteht sich jedoch, dass der domartige Abschnitt bei anderen Varianten der Erfindung, insbesondere bei Fahrzeugen mit einem größeren Abrisskantenabstand, in einer anderen Entfernung von der Fahrzeugspitze bzw. der Strömungsabrisskante angeordnet sein kann. Bezogen auf den Abrisskantenabstand liegt der domartige Abschnitt dann bevorzugt näher an der Fahrzeugspitze, um eine frühzeitige zeitliche Verdrängung der Strömung zu erzielen. Diese insbesondere im Hochgeschwindigkeitsverkehr vorteilhafte Gestaltung mit der möglichst nahe an die Konstruktionsgrenzhülle 112 heranreichenden Außenhaut 102.1 wird im vorliegenden Beispiel in besonders vorteilhafter Weise mit der Ablenkung der Luftströmung im Bereich der Strömungsabrisskante 107 vereint, indem die Strömungsleiteinrichtung 109 einen dem Leitabschnitt 109.1 vorlaufenden Diffusorabschnitt 109.3 aufweist.

Der Diffusorabschnitt 109.3 erstreckt sich zwischen dem freien Fahrzeugende 101.1 und dem Leitabschnitt 109.1, wobei er so gestaltet ist, dass erden in der Fahrzeughöhenrichtung für den Luftstrom (zwischen der Außenhaut 102.1 und dem Gleisbett) zur Verfügung stehenden freien Strömungsquerschnitt ausgehend von dem tiefsten Punkt PT in der Strömungsrichtung (also zur Strömungsabrisskante 107 hin) nach Art eines Diffusors erhöht.

Diese über den Diffusorabschnitt 109.3 erzielte Aufweitung Strömungsquerschnittes ermöglicht es, die unter den Wagenkasten 102 gelangende Luftströmung zunächst über den Diffusorabschnitt 109.3 nach oben zu lenken, um sie dann durch den Leitabschnitt 109.1 wieder nach unten lenken zu können (siehe insbesondere Figur 5), wodurch die gewünschte Ablenkung der Hauptströmungsrichtung 111 und damit der Scherschicht 108 in dem Bereich hinter der Strömungsabrisskante 107 erzielt wird.

Hiermit ist es im vorliegenden Beispiel möglich, sowohl die vor den Diffusorabschnitt 109.3 liegende Außenhaut 102.1 an der Fahrzeugspitze als auch die Strömungsabrisskante 107 unmittelbar (gegebenenfalls sogar vollständig) an die Konstruktionsgrenzhülle 112 heranzuführen und somit die überhaupt in den Bereich des Fahrwerksausschnitts 106 gelangende Luftmenge zu reduzieren.

Um eine besonders effektive seitliche Verdrängung zu erzielen, ist dem Diffusorabschnitt 109.3 ein Einlaufabschnitt 109.5 der Strömungsleiteinrichtung 109 vorgelagert, in dessen Bereich eine Tangente an die Außenhaut 102.1 in einer senkrecht zur Fahrzeugquerrichtung verlaufenden Schnittebene ihre Neigung zur Fahrzeuglängsrichtung kontinuierlich zu einem Wert Null hin ändert.

Auch der Diffusorabschnitt kann wiederum eine beliebige geeignete Länge aufweisen, solange die oben beschriebene Leitfunktion erzielt wird. Im vorliegenden Beispiel erstreckt sich der Diffusorabschnitt 109.3 in der Fahrzeuglängsrichtung über 26% des Abrisskantenabstandes DA, da hiermit ein besonders vorteilhaftes Leitverhalten erzielt werden kann.

Ähnliches gilt für den Einlaufabschnitt, der eine beliebige geeignete Länge und Position in der Fahrzeuglängsrichtung aufweisen kann. Im vorliegenden Beispiel erstreckt sich der Einlaufabschnitt 109.5 in der Fahrzeuglängsrichtung bis zum tiefsten Punkt PT und damit bis zu einer Entfernung von 57% des Abrisskantenabstands DA. Bezogen auf die Fahrzeugspitzenhöhe HN über der Konstruktionsgrenzhülle 112 erstreckt sich der Einlaufabschnitt 109.5 in der Fahrzeuglängsrichtung bis zu einer Entfernung von 250% der Fahrzeugspitzenhöhe HN. Mit anderen Worten kommt es in vorteilhafter Weise bei weit heruntergezogener Nase des Fahrzeugs 101 in vorteilhafter Weise bereits sehr früh zu einer seitlichen Verdrängung des Luftstromes.

In Fahrzeugquerrichtung erstrecken sich der domartige Abschnitt 114 und der Diffusorabschnitt 109.3 mittig über etwa 30% der Spurweite W des Drehgestells 103, da hiermit eine besonders vorteilhafte Gestaltung mit günstiger frühzeitiger seitlicher Verdrängung der Luftströmung erzielt wird.

Hinsichtlich der Gestaltung der mit der Luftströmung zusammenwirkenden Diffusoroberfläche 109.4 des Diffusorabschnitts 109.3 gelten grundsätzlich dieselben Aussagen, wie sie oben für die Leitoberfläche 109.2 getroffen wurden. Insbesondere kann auch der Diffusorabschnitt wiederum jeweils zumindest abschnittsweise eine ebene, eine mindestens einfach gekrümmte, insbesondere eine im Wesentlichen zylindrische Oberfläche, oder eine zweifach gekrümmte Oberfläche, insbesondere eine im Wesentlichen ellipsoide oder hyperboloide Oberfläche, aufweisen.

Im vorliegenden Beispiel ist die Diffusoroberfläche 109.4 als kontinuierliche, glatte Oberfläche gestaltet, wobei eine Tangente an die Diffusoroberfläche 109.4 in einer senkrecht zur Fahrzeugquerrichtung verlaufenden Schnittebene (insbesondere in der Fahrzeuglängsmittenebene aus Figur 5) um einen zweiten Neigungswinkel zur Fahrzeuglängsrichtung geneigt ist. Der zweite Neigungswinkel steigt dabei ausgehend von dem Wert Null im Bereich des tiefsten Punktes PT zunächst kontinuierlich auf einen Wert von 5° an, bis er sich nach einem Wendepunkt WP wieder auf den Wert Null verringert, den er in einem höchsten Punkt PH erreicht. Im vorliegenden Beispiel liegt der höchste Punkt PH des Diffusorabschnitts 109.3 in einer Entfernung von etwa 83% des Abrisskantenabstands DA von der Fahrzeugspitze 101.1, während der Wendepunkt WP etwa mittig zwischen dem tiefsten Punkt PT und dem höchsten Punkt PH liegt.

Eine im Hinblick auf die störungsfreie Leitung der Luftströmung und die einfache Integration in die Geometrie des Fahrzeugkopfs vorteilhafte Gestaltung wird im vorliegenden Beispiel dadurch erzielt, dass die Diffusoroberfläche 109.4 in einer Schnittebene senkrecht zur Fahrzeuglängsrichtung eine im Wesentlichen konvexe Schnittkontur 113 aufweist (siehe Figuren 11 und 12) und in einer Schnittebene senkrecht zur Fahrzeugquerrichtung die beschriebene Schnittkontur mit dem Wendepunkt WP aufweist.

Zwischen dem Diffusorabschnitt 109.3 und dem Leitabschnitt 109.1 ist ein Übergangsabschnitt 109.6 vorgesehen, in dessen Bereich die Tangente an die Außenhaut 109.2 in einer senkrecht zur Fahrzeugquerrichtung verlaufenden Schnittebene ihre Neigung zur Fahrzeuglängsrichtung ausgehend von dem Wert Null kontinuierlich ändert und somit einen störungsfreien Übergang zwischen dem Diffusorabschnitt 109.3 und dem Leitabschnitt 109.1 gewährleistet.

Insgesamt ist somit durch den Diffusorabschnitt 109.3, den Übergangsabschnitt 109.6 und dem Leitabschnitt 109.1 eine leichte Einbuchtung in der Außenhaut 102.1 mit im Wesentlichen S-förmiger Schnittkontur realisiert, über welche trotz des Heranführens des domartigen Abschnitts 114 bis an die Konstruktionsgrenzhülle 112 die beschriebene Ablenkung der Hauptströmungsrichtung 111 nach unten erzielt werden kann.

Im Bereich der Strömungsabrisskante sind zu beiden Seiten der Längsmittenebene zudem jeweils 17 Turbulatorelemente 115 angeordnet. Diese Turbulatorelemente 115 dienen zur Einbringung von Verwirbelungen in die sich nach dem Strömungsabriss an der Strömungsabrisskante 107 ausbildende Scherschicht 108. Hiermit wird der eingangs beschriebene Vorteil der Vermeidung von Geräuschemissionen durch die periodische Bildung von Wirbeln innerhalb der Scherschicht 108 erzielt.

Wie insbesondere den Figuren 9 bis 12 zu entnehmen ist, ist jedes Turbulatorelement 115 als kurzer finnenartiger Vorsprung an der Unterseite der Außenhaut 102.1 ausgebildet, dessen Unterkante bis auf die Konstruktionsgrenzfläche 112 reicht. Das Turbulatorelement 115 ist dabei zur Fahrzeuglängsrichtung und zur Fahrzeugquerrichtung geneigt angeordnet. Dies hat den Vorteil, dass die in die Scherschicht 108 eingebrachte Störung primär in Fahrzeugquerrichtung bzw. in der die Hauptströmungsrichtung 111 enthaltenden Haupterstreckungsebene der Scherschicht 108 wirken kann. Demgemäß kommt es zu keiner unerwünschten durch die Turbulatorelemente 115 bedingten verstärkten Aufweitung der Scherschicht 108 in Fahrzeughöhenrichtung bzw. senkrecht zur Haupterstreckungsebene der Scherschicht 108.

Die Turbulatorelemente 115 sind so angeordnet, dass sie den auf sie auftreffenden Teil des Luftstroms in der Fahrzeugquerrichtung von der Länsgmittenebene des Wagenkastens weg lenken, da hiermit eine besonders günstige Einleitung der Turbulenz in die Scherschicht 108 erzielt wird. Die Länge der Turbulatorelemente 115 ist so gewählt, dass sie eine ausreichend starke Ablenkung des auf sie auftreffenden Teils des Luftstroms in der Fahrzeugquerrichtung bzw. innerhalb der Haupterstreckungsebene der Scherschicht bewirken, der zu einer ausreichenden Feinverwirbelung in der Scherschicht 108 führt, ohne diese quer zu ihrer Haupterstreckungsebene nennenswert zusätzlich aufzuweiten.

Es versteht sich, dass die Turbulatorelemente bei anderen Varianten der Erfindung grundsätzlich auf beliebige andere geeignete Weise gestaltet sein können. Insbesondere können die Turbulatorelemente eine beliebige geeignete Ausrichtung zur Fahrzeuglängsrichtung aufweisen, solange sie zu der beschriebenen ausreichenden Feinverwirbelung in der Scherschicht in deren Haupterstreckungsebene führen.

Es sei an dieser Stelle nochmals angemerkt, dass eine derart zur Hauptströmungsrichtung geneigte Anordnung des Turbulatorelements, die eine Feinverwirbelung in der Scherschicht ohne nennenswerte Aufweitung der Scherschicht quer zu ihrer Haupterstreckungsebene mit sich bringt, einen von der Ablenkung der Scherschicht nach unten unabhängigen Gedanke darstellt.

Die vorliegende Erfindung wurde vorstehend anhand eines Beispiels beschrieben, bei dem das Kopfmodul als komplettes Bauteil die zum erfindungsgemässen Wagenkastenmodul gehörende Strömungsleiteinrichtung integriert. Es versteht sich jedoch, dass das erfindungsgemäße Wagenkastenmodul bei anderen Varianten der Erfindung als separates Modul gestaltet sein, welches auch nachträglich an einem bestehenden Wagenkasten montiert werden kann, wie dies in Figur 9 durch die gestrichelte Kontur 116 angedeutet ist. In diesem Fall eignet es sich insbesondere als Nachrüstbauteil für bereits bestehende Fahrzeuge, die bisher eine herkömmliche Gestaltung mit einer parallel zur Fahrzeuglängsachse verlaufenden Unterseite des Wagenkastens aufweisen.

Die vorliegende Erfindung wurde vorstehend anhand eines Beispiels beschrieben, bei dem die o.g. Strömungsleiteinrichtung an dem vorlaufenden Fahrwerk angeordnet ist. Es versteht sich jedoch, dass die Strömungsleiteinrichtung bei anderen Varianten der Erfindung zusätzlich oder alternativ natürlich auch im Bereich anderer Fahrwerke vorgesehen sein kann. Weiterhin versteht es sich, dass die Strömungsleiteinrichtung natürlich auch zu beiden Seiten des betreffenden Fahrwerks vorgesehen sein kann.

Die vorliegende Erfindung wurde vorstehend ausschließlich für Beispiele von Fahrzeugen für Triebzüge beschrieben. Es versteht sich jedoch, dass die Erfindung auch im Zusammenhang mit anderen Schienenfahrzeugen zum Einsatz kommen kann. Weiterhin wurde die Erfindung ausschließlich im Zusammenhang mit Schienenfahrzeugen beschrieben. Es versteht sich jedoch, dass sie auch im Zusammenhang mit beliebigen anderen Fahrzeugen zur Reduzierung der Schallemissionen, zur Verringerung des Strömungswiderstands sowie zur Reduktion der aerodynamischen Lasten am Fahrweg zum Einsatz kommen kann.

## Patentansprüche

1. Wagenkastenmodul zur Bildung wenigstens eines Teils eines Kopfabschnitts (105) eines auf wenigstens einem Fahrwerk (103) abgestützten Wagenkastens (102) eines Fahrzeugs, insbesondere eines Schienenfahrzeugs für den Hochgeschwindigkeitsverkehr, mit
- einer Strömungsleiteinrichtung (109), wobei
- der Wagenkasten (102) eine Fahrzeuglängsrichtung, eine Fahrzeugquerrichtung und eine Fahrzeughöhenrichtung definiert,
- der Kopfabschnitt (105) dazu ausgebildet ist, in einem Normalbetrieb des Fahrzeugs ein vorlaufendes freies Fahrzeugende (101.1) zu bilden,
- die Strömungsleiteinrichtung (109) dazu ausgebildet ist, an einer Unterseite (102.2) des Wagenkastens (102) in der Fahrzeuglängsrichtung zwischen dem freien Fahrzeugende (101.1) und einem vorlaufenden Ende eines Fahrwerksausschnitts (106) des Wagenkastens angeordnet zu werden, der das dem freien Fahrzeugende (101.1) zugeordnete Fahrwerk (103) aufnimmt, und
- die Strömungsleiteinrichtung (109) dazu ausgebildet ist, im Betrieb des Fahrzeugs einen die Unterseite (102.2) des Wagenkastens vom freien Fahrzeugende (101.1) zum Fahrwerksausschnitt (106) hin überstreichenden Luftstrom zu beeinflussen, wobei
- die Strömungsleiteinrichtung (109) einen Leitabschnitt (109.1) aufweist, der an eine Strömungsabrisskante (107) an dem vorlaufenden Ende des Fahrwerksausschnitts (106) angrenzt und der in der Fahrzeughöhenrichtung einen für den Luftstrom zur Verfügung stehenden freien Strömungsquerschnitt zur Strömungsabrisskante (107) hin derart verringert, dass dem Luftstrom im Bereich der Strömungsabrisskante (107) über einen Ablenkungsbereich (110) eine nach unten gerichtete Hauptströmungsrichtung (111) aufgeprägt wird, die um wenigstens 3°, vorzugsweise wenigstens 4°, weiter vorzugsweise wenigstens 6° zur Fahrzeuglängsrichtung geneigt ist,
**dadurch gekennzeichnet, dass**
- die Strömungsleiteinrichtung (109) einen dem Leitabschnitt (109.1) vorgelagerten Diffusorabschnitt (109.3) aufweist, der sich zwischen dem freien Fahrzeugende (101.1) und dem Leitabschnitt (109.1) erstreckt und in der Fahrzeughöhenrichtung einen für den Luftstrom zur Verfügung stehenden freien Strömungsquerschnitt zur Strömungsabrisskante (107) hin erhöht.

2. Wagenkastenmodul nach Anspruch 1, **dadurch gekennzeichnet, dass**
- die Hauptströmungsrichtung (111) um 3° bis 10°, vorzugsweise um 4° bis 8°, weiter vorzugsweise um 5° bis 7°, insbesondere um 6° bis 9°, zur Fahrzeuglängsrichtung geneigt ist
und/oder
- sich der Ablenkungsbereich (110) in der Fahrzeugquerrichtung über wenigstens 60%, vorzugsweise über wenigstens 80%, weiter vorzugsweise über wenigstens 100%, einer Spurweite des Fahrwerks (103) erstreckt.

3. Wagenkastenmodul nach Anspruch 1 oder 2, **dadurch gekennzeichnet, dass**
- die Strömungsabrisskante (107) in der Fahrzeuglängsrichtung in einem Abrisskantenabstand von dem freien Fahrzeugende (101.1) entfernt angeordnet ist,
- die Strömungsleiteinrichtung (109) eine mit dem Luftstrom zusammenwirkende Strömungsleitoberfläche (109.2) aufweist, die eine Einhüllende definiert, und
- sich der Leitabschnitt (109.1) zwischen dem freien Fahrzeugende (101.1) und der Strömungsabrisskante (107) erstreckt,
wobei
- sich der Leitabschnitt (109.1) in der Fahrzeuglängsrichtung über wenigstens 10%, vorzugsweise über wenigstens 20%, weiter vorzugsweise über 10% bis 30%, des Abrisskantenabstandes erstreckt
und/oder
- der Leitabschnitt (109.1) eine mit dem Luftstrom zusammenwirkende Leitoberfläche (109.2) aufweist, wobei eine Tangente an die Einhüllende im Bereich der Leitoberfläche (109.2) in einer senkrecht zur Fahrzeugquerrichtung verlaufenden Schnittebene wenigstens um einen ersten Neigungswinkel von wenigstens 3°, vorzugsweise von 3° bis 10°, weiter vorzugsweise von 3° bis 8°, weiter vorzugsweise von 3° bis 6°, zur Fahrzeuglängsrichtung geneigt ist, wobei der erste Neigungswinkel insbesondere zur Strömungsabrisskante (107) hin zunimmt
und/oder
- sich der Leitabschnitt (109.1) in der Fahrzeugquerrichtung über wenigstens 80%, vorzugsweise über wenigstens 100%, weiter vorzugsweise über wenigstens 110%, einer Spurweite des Fahrwerks (103) erstreckt.

4. Wagenkastenmodul nach Anspruch 3, **dadurch gekennzeichnet, dass**
- der Leitabschnitt (109.1) die Strömungsabrisskante (107) ausbildet, wobei die Strömungsabrisskante (107) insbesondere im Wesentlichen geradlinig ausgebildet ist,
und/oder
- der Leitabschnitt (109.1) eine im Wesentlichen glatte Leitoberfläche (109.2) aufweist
und/oder
- der Leitabschnitt (109.1) eine mindestens einfach gekrümmte Leitoberfläche (109.2), insbesondere eine zweifach gekrümmte Leitoberfläche (109.2), aufweist.

5. Wagenkastenmodul nach Anspruch 3 oder 4, **dadurch gekennzeichnet, dass**
- der Leitabschnitt eine im Wesentlichen zylindrische Leitoberfläche oder eine im Wesentlichen ellipsoide Leitoberfläche oder eine im Wesentlichen hyperboloide Leitoberfläche, aufweist
und/oder
- der Leitabschnitt (109.1) eine Leitoberfläche (109.2) aufweist, die in einer Schnittebene senkrecht zur Fahrzeuglängsrichtung eine im Wesentlichen konvexe erste Schnittkontur (113) aufweist und in einer Schnittebene senkrecht zur Fahrzeugquerrichtung eine im Wesentlichen konkave zweite Schnittkontur (113) aufweist.

6. Wagenkastenmodul nach einem der Ansprüche 3 bis 5, **dadurch gekennzeichnet, dass**
- sich der Diffusorabschnitt (109.3) in der Fahrzeuglängsrichtung über wenigstens 15%, vorzugsweise über wenigstens 25%, weiter vorzugsweise über 15% bis 45%, des Abrisskantenabstandes erstreckt
und/oder
- der Diffusorabschnitt (109.3) eine mit der Luftströmung zusammenwirkende Diffusoroberfläche (109.4) aufweist, wobei eine Tangente an die Einhüllende im Bereich der Diffusoroberfläche (109.4) in einer senkrecht zur Fahrzeugquerrichtung verlaufenden Schnittebene um einen ersten Neigungswinkel von wenigstens 1°, vorzugsweise von 2° bis 7°, weiter vorzugsweise von 3° bis 5°, zur Fahrzeuglängsrichtung geneigt ist
und/oder
- sich der Diffusorabschnitt (109.3) in der Fahrzeugquerrichtung über wenigstens 20%, vorzugsweise über wenigstens 30%, weiter vorzugsweise über 20% bis 40%, einer Spurweite des Fahrwerks (103) erstreckt.

7. Wagenkastenmodul nach Anspruch 6, **dadurch gekennzeichnet, dass**
- der Diffusorabschnitt (109.3) eine im Wesentlichen glatte Oberfläche (109.4) aufweist
und/oder
- der Diffusorabschnitt (109.3) eine mindestens einfach gekrümmte, insbesondere eine im Wesentlichen zylindrische Oberfläche oder eine zweifach gekrümmte Oberfläche (109.4), insbesondere eine im Wesentlichen ellipsoide oder hyperboloide Oberfläche, aufweist,
und/oder
- der Diffusorabschnitt (109.3) eine Diffusoroberfläche (109.4) aufweist, die in einer Schnittebene senkrecht zur Fahrzeuglängsrichtung eine im Wesentlichen konvexe dritte Schnittkontur (113) aufweist und in einer Schnittebene senkrecht zur Fahrzeugquerrichtung eine vierte Schnittkontur (113) mit einem Wendepunkt aufweist.

8. Wagenkastenmodul nach Anspruch 6 oder 7, **dadurch gekennzeichnet, dass**
- zwischen dem Diffusorabschnitt (109.3) und dem Leitabschnitt (109.1) ein Übergangsabschnitt (109.6) der Strömungsleiteinrichtung (109) vorgesehen ist, in dessen Bereich eine Tangente an die Einhüllende in einer senkrecht zur Fahrzeugquerrichtung verlaufenden Schnittebene ihre Neigung zur Fahrzeuglängsrichtung insbesondere kontinuierlich ändert
und/oder
- ein dem Diffusorabschnitt (109.3) vorgelagerter Einlaufabschnitt (109.5) der Strömungsleiteinrichtung (109) vorgesehen ist, in dessen Bereich eine Tangente an die Einhüllende in einer senkrecht zur Fahrzeugquerrichtung verlaufenden Schnittebene ihre Neigung zur Fahrzeuglängsrichtung zu einem Wert Null hin, insbesondere kontinuierlich, ändert.
und/oder
- für den Wagenkasten (102) eine Konstruktionsgrenzhülle (112) vorgegeben ist, welche der Wagenkasten (102) einzuhalten hat, und ein dem Diffusorabschnitt (109.3) vorgelagerter Einlaufabschnitt (109.5) der Strömungsleiteinrichtung (109) vorgesehen ist, der zumindest in der Fahrzeughöhenrichtung im Wesentlichen bis an die Konstruktionsgrenzhülle (112) heranreicht.

9. Wagenkastenmodul nach einem der vorhergehenden Ansprüche, **dadurch gekennzeichnet, dass**
- die Strömungsleiteinrichtung (109) dazu ausgebildet ist, an der Unterseite (102.2) des Wagenkastens (102) zwischen einem der Strömungsabrisskante (107) vorgelagerten Einlaufabschnitt (109.5) und der Strömungsabrisskante (107) eine leichte Einbuchtung (109.1, 109.3) in einer Außenhaut (102.1) des Wagenkastens (102) auszubilden, wobei
- die Strömungsleiteinrichtung (109) eine mit dem Luftstrom zusammenwirkende Strömungsleitoberfläche (109.2, 109.4) aufweist, die eine Einhüllende definiert, und
- die Einhüllende über einen Querbereich (110) in einer senkrecht zur Fahrzeugquerrichtung verlaufenden Schnittebene eine im Wesentlichen S-förmige Schnittkontur (113) aufweist.

10. Wagenkastenmodul nach Anspruch 9, **dadurch gekennzeichnet, dass**
- sich der Querbereich (110) in der Fahrzeugquerrichtung über wenigstens 50%, vorzugsweise über wenigstens 80%, weiter vorzugsweise über 100%, einer Spurweite des Fahrwerks (103) erstreckt.
und/oder
- die Strömungsabrisskante (107) in der Fahrzeuglängsrichtung in einem Abrisskantenabstand von dem freien Fahrzeugende (101.1) entfernt angeordnet ist, und der Einlaufabschnitt in der Fahrzeuglängsrichtung sich bis zu einer Entfernung von 35% bis 65% des Abrisskantenabstands, vorzugsweise von 40% bis 60% des Abrisskantenabstands, weiter vorzugsweise von 45% bis 55% des Abrisskantenabstands, von dem freien Fahrzeugende (101.1) erstreckt
und/oder
- für den Wagenkasten (102) eine Konstruktionsgrenzhülle (112) vorgegeben ist, welche der Wagenkasten (102) einzuhalten hat, das freie Fahrzeugende (101.1) eine in der Fahrzeughöhenrichtung eine Fahrzeugspitzenhöhe über der Konstruktionsgrenzhülle (112) aufweist und sich der Einlaufabschnitt (109.5) in der Fahrzeuglängsrichtung bis zu einer Entfernung von 150% bis 300% der Fahrzeugspitzenhöhe, vorzugsweise von 175% bis 275% der Fahrzeugspitzenhöhe, weiter vorzugsweise von 200% bis 250% der Fahrzeugspitzenhöhe, von dem freien Fahrzeugende (101.1) erstreckt.

11. Wagenkastenmodul nach Anspruch 9 oder 10, **dadurch gekennzeichnet, dass**
- für den Wagenkasten (102) eine Konstruktionsgrenzhülle (112) vorgegeben ist, welche der Wagenkasten (102) einzuhalten hat, und der Einlaufabschnitt (109.5) zumindest in der Fahrzeughöhenrichtung im Wesentlichen bis an die Konstruktionsgrenzhülle (112) heranreicht.
und/oder
- der Einlaufabschnitt (109.5) im Bereich eines im Wesentlichen domartigen Vorsprungs (114) an der Unterseite (102.2) des Wagenkastens (102) ausgebildet ist.

12. Wagenkastenmodul nach einem der vorhergehenden Ansprüche, **dadurch gekennzeichnet, dass**
- die Strömungsabrisskante (107) im Wesentlichen geradlinig ausgebildet ist und/oder
- für den Wagenkasten (102) eine Konstruktionsgrenzhülle (112) vorgegeben ist, welche der Wagenkasten (102) einzuhalten hat, und die Strömungsabrisskante (107) zumindest in der Fahrzeughöhenrichtung im Wesentlichen bis an die Konstruktionsgrenzhülle (112) heranreicht.

13. Wagenkastenmodul nach einem der vorhergehenden Ansprüche, **dadurch gekennzeichnet, dass**
- im Bereich der Strömungsabrisskante (107) eine Mehrzahl von Turbulatorelementen (115) zur Einbringung von Verwirbelungen in eine sich nach einem Strömungsabriss an der Strömungsabrisskante (107) ausbildende Scherschicht (108) vorgesehen ist, wobei
- insbesondere wenigstens eines der Turbulatorelemente (115) als finnenartiger Vorsprung an der Unterseite (102.2) des Wagenkastens (102) ausgebildet ist, der insbesondere zur Fahrzeuglängsrichtung geneigt angeordnet ist
und/oder
- insbesondere wenigstens eines der Turbulatorelemente (115) dazu ausgebildet ist, den darauf auftreffenden Teil des Luftstroms in der Fahrzeugquerrichtung von einer Länsgmittenebene des Wagenkastens (102) wegzulenken.

14. Wagenkasten mit einem Wagenkastenmodul (105) nach einem der vorhergehenden Ansprüche.

15. Fahrzeug mit einem Wagenkasten nach Anspruch 14, wobei es insbesondere ein Fahrzeug für den Hochgeschwindigkeitsverkehr mit einer Nennbetriebsgeschwindigkeit oberhalb von 250 km/h, insbesondere oberhalb von 300 km/h, ist.

## Claims

1. Wagon body module for forming at least a portion of a head portion (105) of a wagon body (102) of a vehicle supported on at least one running gear (103), in particular a rail vehicle for high-speed traffic, having
- a flow guiding device (109),
- said wagon body (102) defining a vehicle longitudinal direction, a vehicle transverse direction and a vehicle height direction,
- said head portion (105) being configured to form a leading free vehicle end (101.1) during normal operation of said vehicle,
- said flow guiding device (109) being configured to be arranged, at a lower side (102.2) of said wagon body (102), in said vehicle longitudinal direction between said free vehicle end (101.1) and a leading end of a running gear cutout (106) of said wagon body, the cutout receiving said running gear (103) associated with said free vehicle end (101.1), and
- said flow guiding device (109) being configured to influence, during operation of said vehicle, an air flow which flows over said lower side (102.2) of said wagon body from said free vehicle end (101.1) towards said running gear cutout (106),
- said flow guiding device (109) has a guiding portion (109.1) adjoining said flow separation edge (107) at said leading end of said running gear cutout (106) and reducing, in said vehicle height direction, a free flow cross-section available for said air flow towards said flow separation edge (107) in such a manner that, in a region of said flow separation edge (107) by means of a deflection region (110), a downwardly directed main flow direction (111) is imposed to said air flow, which is inclined relative to said vehicle longitudinal direction by at least 3°, preferably at least 4°, more preferably at least 6°,
**characterized in that**
- said flow guiding device (109) has a diffuser portion (109.3) located upstream of said guiding portion (109.1), extending between said free vehicle end (101.1) and said guiding portion (109.1) and increasing, in said vehicle height direction, a free flow cross-section available for said air flow towards said flow separation edge (107).

2. Wagon body module according to claim 1, **characterized in that**
- said main flow direction (111) is inclined relative to said vehicle longitudinal direction by 3° to 30°, preferably by 4° to 8°, more preferably by 5° to 7°, in particular by 6° to 9°,
and/or
- said deflection region (110), in said vehicle transverse direction, extends over at least 60%, preferably over at least 80%, more preferably over at least 100%, of a wheel gauge of said running gear (103).

3. Wagon body module according to claim 1 or 2, **characterized in that**
- said flow separation edge (107) is arranged so as to be spaced from said free vehicle end (101.1) in said vehicle longitudinal direction by a separation edge distance,
- said flow guiding device (109) has a flow guiding surface (109.2) cooperating with said air flow and defining an envelope, and
- said guiding portion (109.1) extends between said free vehicle end (101.1) and said flow separation edge (107),
- said guiding portion (109.1) in said vehicle longitudinal direction extending over at least 10%, preferably over at least 20%, more preferably over 10% to 30% of said separation edge distance,
and/or
- said guiding portion (109.1) has a guiding surface (109.2) cooperating with said air flow, a tangent to said envelope in the region of said guiding surface (109.2), in a sectional plane extending perpendicularly to said vehicle transverse direction, being inclined relative to said vehicle longitudinal direction by at least a first angle of inclination of at least 3°, preferably 3° to 10°, more preferably 3° to 8°, more preferably 3° to 6°, said first angle of inclination particularly increasing in said direction towards said flow separation edge (107),
and/or
- said guiding portion (109.1) extending in said vehicle transverse direction over at least 80%, preferably over at least 100%, more preferably over at least 110% of a wheel gauge of said running gear (103).

4. Wagon body module according to claim 3, **characterized in that**
- said guiding portion (109.1) forms said flow separation edge (107), said flow separation edge (107), in particular, being constructed in a substantially linear manner,
and/or
- said guiding portion (109.1) has a substantially smooth guiding surface (109.2),
and/or
- said guiding portion (109.1) has a guiding surface (109.2) which is at least singularly curved, in particular a guiding surface (109.2) which is curved twice.

5. Wagon body module according to claim 3 or 4, **characterized in that**
- said guiding portion has a substantially cylindrical guiding surface or a substantially ellipsoid guiding surface or a substantially hyperboloid guiding surface,
and/or
- said guiding portion (109.1) has a guiding surface (109.2) which has a substantially convex first sectional contour (113) in a sectional plane perpendicular to said vehicle longitudinal direction and has a substantially concave second sectional contour (113) in a sectional plane perpendicular to said vehicle transverse direction.

6. Wagon body module according to any one of claims 3 to 5, **characterized in that**
- said diffuser portion (109.3) extends, in said vehicle longitudinal direction, over at least 15%, preferably over at least 25%, more preferably over 15% to 45%, of said separation edge distance,
and/or
- said diffuser portion (109.3) has a diffuser surface (109.4) cooperating with said air flow, a tangent to said envelope, in said region of said diffuser surface (109.4), in a sectional plane extending perpendicularly to said vehicle transverse direction, being inclined relative to said vehicle longitudinal direction by a first angle of inclination of at least 1°, preferably 2° to 7°, more preferably 3° to 5°,
and/or
- said diffuser portion (109.3) extends, in said vehicle transverse direction, over at least 20%, preferably over at least 30%, more preferably over 20% to 40%, of a wheel gauge of said running gear (103).

7. Wagon body module according to claim 6, **characterized in that**
- said diffuser portion (109.3) has a substantially smooth surface (109.4),
and/or
- said diffuser portion (109.3) has a surface which is at least singularly curved, in particular a substantially cylindrical surface, or a surface (109.4) which is curved twice, in particular a substantially ellipsoid or hyperboloid surface,
and/or
- said diffuser portion (109.3) has a diffuser surface (109.4) having a substantially convex third sectional contour (113) in a sectional plane perpendicular to said vehicle longitudinal direction and having a fourth sectional contour (113) having a point of inflection in a sectional plane perpendicular to said vehicle transverse direction.

8. Wagon body module according to claim 6 or 7, **characterized in that**
- a transition portion (109.6) of said flow guiding device (109) is provided between said diffuser portion (109.3) and said guiding portion (109.1), in the area of said transition portion, a tangent to said envelope, in a sectional plane extending perpendicularly to said vehicle transverse direction, changing, in particular continuously, its inclination relative to said vehicle longitudinal direction,
and/or
- an introductory portion (109.5) of said flow guiding device (109) located upstream of said diffuser portion (109.3) is provided, in the area of said introductory portion, a tangent to said envelope, in a sectional plane extending perpendicularly to said vehicle transverse direction, changing, in particular continuously, its inclination relative to said vehicle longitudinal direction towards a value of zero,
and/or
- a construction limit envelope (112) which said wagon body (102) has to comply with is predetermined for said wagon body (102), an introductory portion (109.5) of said flow guiding device (109) being provided upstream of said diffuser portion (109.3) and, at least in said vehicle height direction, extending substantially up to said construction limit envelope (112).

9. Wagon body module according to any one of the preceding claims, **characterized in that**
- said flow guiding device (109) is constructed in order to form a slight indentation (109.1, 109.3) in an outer skin (102.1) of said wagon body (102) at said lower side (102.2) of said wagon body (102) between an introductory portion (109.5) located upstream of said flow separation edge (107) and said flow separation edge (107),
- said flow guiding device (109) having a flow guiding surface (109.2, 109.4) cooperating with said air flow and defining an envelope, and
- said envelope, in a sectional plane extending perpendicularly to said vehicle transverse direction, having a substantially S-like sectional contour (113) over a transverse region (110).

10. Wagon body module according to claim 9, **characterized in that**
- said transverse region (110) extends in said vehicle transverse direction over at least 50%, preferably over at least 80%, more preferably over 100%, of a wheel gauge of said running gear (103),
and/or
- said flow separation edge (107), in said vehicle longitudinal direction, is arranged so as to be spaced from said free vehicle end (101.1) by a separation edge distance, said introductory portion extending, in said vehicle longitudinal direction, up to a distance from said free vehicle end (101.1) of 35% to 65% of said separation edge distance, preferably 40% to 60% of said separation edge distance, more preferably 45% to 55% of said separation edge distance,
and/or
- a construction limit envelope (112) which said wagon body (102) has to comply with is predetermined for said wagon body (102), said free vehicle end (101.1), in said vehicle height direction, having a vehicle front height above said construction limit envelope (112), said introductory portion (109.5), in said vehicle longitudinal direction, extending up to a distance from said free vehicle end (101.1) of 150% to 300% of said vehicle front height, preferably 175% to 275% of said vehicle front height, more preferably 200% to 250% of said vehicle front height.

11. Wagon body module according to claim 9 or 10, **characterized in that**
- a construction limit envelope (112) which said wagon body (102) has to comply with is predetermined for said wagon body (102), said introductory portion (109.5), at least in said vehicle height direction, extending substantially up to said construction limit envelope (112),
and/or
- said introductory portion (109.5) is constructed in the area of a substantially dome-like projection (114) at said lower side (102.2) of said wagon body (102).

12. Wagon body module according to any one of the preceding claims, **characterized in that**
- said flow separation edge (107) is constructed in a substantially linear manner,
and/or
- a construction limit envelope (112) which said wagon body (102) has to comply with is predetermined for said wagon body (102), said flow separation edge (107), at least in said vehicle height direction, extending substantially up to said construction limit envelope (112).

13. Wagon body module according to any one of the preceding claims, **characterized in that**,
- in said region of said flow separation edge (107), a plurality of turbulator elements (115) are provided for introducing turbulence into a shear layer (108) forming after flow separation at said flow separation edge (107),
- in particular, at least one of said turbulator elements (115) being constructed as a fin-like projection at said lower side (102.2) of said wagon body (102), which, in particular, is arranged so as to be inclined relative to said vehicle longitudinal direction,
and/or,
- in particular, at least one of said turbulator elements (115) being configured to divert a portion of said air flow striking it in said vehicle transverse direction away from a longitudinal center plane of said wagon body (102).

14. Wagon body having a wagon body module (105) according to any one of the preceding claims.

15. Vehicle having a wagon body according to claim 14, wherein it is a vehicle for high-speed traffic having a nominal operating speed above 250 km/h, in particular above 300 km/h.

## Revendications

1. Module de caisse de wagon pour former au moins une partie d'une section de tête (105) d'une caisse de wagon (102) d'un véhicule, notamment un véhicule ferroviaire à grande vitesse, supportée sur au moins un train de roulement (103), avec
- un dispositif de guide de courant (109), dans lequel
- la caisse de wagon (102) définit une direction longitudinale du véhicule, un une direction transversale du véhicule et une direction de la hauteur du véhicule,
- la section de tête (105) est adaptée pour former une extrémité libre avant du véhicule (101.1) lors du fonctionnement normal du véhicule,
- le dispositif de guide de courant (109) est adapté à être disposé à une face inférieure (102.2) de la caisse de wagon (102), dans la direction longitudinale du véhicule, entre l'extrémité libre du véhicule (101.1) et une extrémité avant d'un évidement de train de roulement (106) de la caisse de wagon, l'évidement recevant le train de roulement (103) associé à l'extrémité libre du véhicule (101.1), et
- le dispositif de guide de courant (109) est adapté pour affecter, pendant le fonctionnement du véhicule, un courant d'air qui s'écoule sur la face inférieure (102.2) de la caisse de wagon à partir de l'extrémité libre du véhicule (101.1) vers l'évidement de train de roulement (106),
- le dispositif de guide de courant (109) comprend une section de guidage (109.1) adjacente à une arête de séparation de courant (107) à l'extrémité avant de l'évidement de train de roulement (106) et réduisant vers l'arête de séparation de courant (107), dans la direction de la hauteur du véhicule, la section libre disponible pour le courant d'air de telle manière que, dans la zone de l'arête de séparation de courant (107), par l'intermédiaire d'une zone de déflexion (110), une direction principale de courant (111) dirigée vers le bas est imposée au courant d'air, , qui est inclinée par rapport à la direction longitudinale du véhicule par au moins 3°, de préférence au moins 4°, de préférence au moins 6°,
**caractérisé en ce que**
- le dispositif de guide de courant (109) comprend une section de diffuseur (109.3) située en amont de la section de guidage (109,1) et s'étendant entre l'extrémité libre du véhicule (101.1) et la section de guidage (109.1) et agrandissant, vers l'arête de séparation de courant (107), dans la direction de la hauteur du véhicule, la section libre disponible pour le courant d'air.

2. Module de caisse de wagon selon la revendication 1, **caractérisé en ce que**
- la direction principale de courant (111) est inclinée par rapport à la direction longitudinale du véhicule par 3° à 10°, de préférence 4° à 8°, de préférence 5° à 7°, en particulier 6° à 9°,
et/ou
- la zone de déflexion (110) s'étend, dans la direction transversale du véhicule, sur au moins 60%, de préférence sur au moins 80%, plus préférablement sur au moins 100%, d'un écartement du train de roulement (103).

3. Module de caisse de wagon selon la revendication 1 ou 2, **caractérisé en ce que**
- l'arête de séparation de courant (107) est située, dans la direction longitudinale du véhicule, à une distance d'arête de séparation de l'extrémité libre du véhicule (101.1),
- le dispositif de guide de courant (109) comprend une surface de guidage de courant (109,2) coopérant avec le courant d'air et définissant une enveloppe, et
- la section de guidage (109.1) s'étend entre l'extrémité libre du véhicule (101.1) et l'arête de séparation de courant (107),
- la section de guidage (109.1), dans la direction longitudinale du véhicule, s'étendant sur au moins 10%, de préférence sur au moins 20%, plus préférablement sur 10% à 30%, de la distance d'arête de séparation,
et/ou
- la section de guidage (109.1) comprenant une surface de guidage (109.2) coopérante avec le courant d'air, une tangente à l'enveloppe dans la zone de la surface de guidage (109.2), dans une plan de coupe perpendiculaire à la direction transversale du véhicule, étant inclinée par au moins un premier angle d'inclinaison d'au moins 3°, de préférence de 3° à 10°, de préférence de 3° à 8°, de préférence de 3° à 6°, par rapport à la direction longitudinale de véhicule, le premier angle d'inclinaison, en particulier, augmentant vers l'arête de séparation de courant (107),
et/ou
- la section de guidage (109.1) s'étendant, dans la direction transversale du véhicule, sur au moins 80%, de préférence au moins 100%, plus préférablement au moins 110%, d'un écartement du train de roulement (103).

4. Module de caisse de wagon selon la revendication 3, **caractérisé en ce que**
- la section de guidage (109.1) forme l'arête de séparation de courant (107), l'arête de séparation de courant (107), en particulier, étant sensiblement rectiligne,
et/ou
- la section de guidage (109.1) comprend une surface de guidage (109.2) sensiblement lisse,
et/ou
- la section de guidage (109.1) comprend au moins une surface de guidage (109.2) à courbure au moins singulière, en particulier, une surface de guidage à courbure double (109,2),

5. Module de caisse de wagon selon la revendication 3 ou 4, **caractérisé en ce que**
- la section de guidage comprend une surface de guidage sensiblement cylindrique ou une surface de guidage sensiblement ellipsoïdale ou une surface de guidage sensiblement hyperboloïde,
et/ou
- la section de guidage (109.1) comprend une surface de guidage (109.2) ayant, dans un plan de coupe perpendiculaire à la direction longitudinale du véhicule, un premier contour de coupe (113) sensiblement convexe et, dans un plan de coupe perpendiculaire à la direction transversale du véhicule, un deuxième contour de coupe (113) sensiblement concave.

6. Module de caisse de wagon selon l'une quelconque des revendications 3 à 5,
**caractérisé en ce que**
- la section de diffuseur (109.3), dans la direction longitudinale du véhicule, s'étend sur au moins 15%, de préférence sur au moins 25%, plus préférablement sur 15% à 45%, de la distance d'arête de séparation,
et/ou
- la section de diffuseur (109.3) comprend une surface de diffuseur (109.4) coopérant avec le courant d'air, une tangente à l'enveloppe dans la zone de la surface de diffuseur (109.4), dans une plan de coupe perpendiculaire à la direction transversale du véhicule, étant inclinée par au moins un premier angle d'inclinaison d'au moins 1°, de préférence de 2° à 7°, de préférence de 3° à 5°, par rapport à la direction longitudinale de véhicule,
et/ou
- la section de diffuseur (109.3), dans la direction transversale du véhicule, s'étend sur au moins 20%, de préférence sur au moins 30%, plus préférablement sur 20% à 40%, d'un écartement du train de roulement (103).

7. Module de caisse de wagon selon la revendication 6, **caractérisé en ce que**
- la section de diffuseur (109.3) comprend une surface (109.4) sensiblement lisse
et/ou
- la section de diffuseur (109.3) comprend une surface à courbure au moins singulière, en particulier, une surface sensiblement cylindrique, ou une surface (109.4) à courbure double, en particulier, une surface sensiblement ellipsoïdale ou sensiblement hyperboloïde,
et/ou
- la section de diffuseur (109.3) comprend une surface de diffuseur (109.4) ayant, dans un plan de coupe perpendiculaire à la direction longitudinale du véhicule, un troisième contour de coupe (113) sensiblement convexe et, dans un plan de coupe perpendiculaire à la direction transversale du véhicule, un quatrième contour de coupe (113) à un point d'inflexion.

8. Module de caisse de wagon selon la revendication 6 ou 7, **caractérisé en ce que**
- entre la section de diffuseur (109.3) et la section de guidage (109.1), une section de transition (109.6) du dispositif de guide de courant (109) est prévue, dans la région de laquelle, dans un plan de coupe perpendiculaire à la direction transversale du véhicule, une tangente à l'enveloppe change, en particulier en continu, son inclinaison par rapport la direction longitudinale,
et/ou
- une section d'entrée de courant (109.5) du dispositif de guide de courant (109) est située en amont de la partie de diffuseur (109.3), dans la région de laquelle, dans un plan de coupe perpendiculaire à la direction transversale du véhicule, une tangente à l'enveloppe change, en particulier en continu, son inclinaison par rapport la direction longitudinale vers une valeur de zéro,
et/ou
- une enveloppe de limite de construction (112) est donnée pour la caisse de wagon (102) que la caisse de wagon (102) doit respecter, et une section d'entrée de courant (109.5) du dispositif de guide de courant (109) est située en amont de la partie de diffuseur (109.3) qui s'étend, au moins dans la direction de la hauteur du véhicule, sensiblement jusqu'à l'enveloppe de limite de construction (112).

9. Module de caisse de wagon selon l'une quelconque des revendications précédentes, **caractérisé en ce que**
- le dispositif de guide de courant (109) est adaptée à former, à la face inférieure (102.2) de la caisse de wagon (102) entre une section d'entrée de courant (109.5) en amont de l'arête de séparation de courant (107) et l'arête de séparation de courant (107), une légère indentation (109.1, 109.3) dans une peau extérieure (102.1) de la caisse de wagon (102),
- le dispositif de guide de courant (109) ayant une surface de guidage de courant (109.2, 109.4) coopérant avec le courant d'air et définissant une enveloppe, et
- l'enveloppe, sur une section transversale (110), ayant, dans un plan de coupe perpendiculaire à la direction transversale du véhicule, un contour de coupe (113) sensiblement en forme de S.

10. Module de caisse de wagon selon la revendication 9, **caractérisé en ce que**
- la section transversale (110) s'étend, dans la direction transversale du véhicule, sur au moins 50%, de préférence sur au moins 80%, plus préférablement sur plus de 100%, d'un écartement du train de roulement (103),
et/ou
- l'arête de séparation de courant (107), dans la direction longitudinale du véhicule, est située à une distance d'arête de séparation de l'extrémité libre du véhicule (101.1) et la section d'entrée, à partir de l'extrémité libre du véhicule (101.1), s'étend, dans la direction longitudinale du véhicule, jusqu'à une distance de 35% à 65% de la distance d'arête de séparation, de préférence de 40% à 60% de la distance d'arête de séparation, de préférence de 45% à 55% de la distance d'arête de séparation,
et/ou
- une enveloppe de limite de construction (112) est donnée pour la caisse de wagon (102) que la caisse de wagon (102) doit respecter, et l'extrémité libre du véhicule (101.1), dans la direction de hauteur de véhicule, a une hauteur du bout du véhicule au-dessus de l'enveloppe de limite de construction (112) et la section d'entrée (109.5), à partir de l'extrémité libre du véhicule (101.1) et dans la direction longitudinale du véhicule, s'étend jusqu'à une distance de 150% à 300% de la hauteur du bout du véhicule, de préférence de 175% à 275 % de la hauteur du bout du véhicule, plus préférablement de 200% à 250% de la hauteur du bout du véhicule.

11. Module de caisse de wagon selon la revendication 9 ou 10, **caractérisé en ce que**
- une enveloppe de limite de construction (112) est donnée pour la caisse de wagon (102) que la caisse de wagon (102) doit respecter, et la section d'entrée (109.5), au moins dans la direction de la hauteur du véhicule, s'étend sensiblement jusqu'à l'enveloppe de limite de construction (112)
et/ou
- la section d'entrée (109.5) est formée sur la face inférieure (102.2) de la caisse de wagon (102) dans la zone d'une saillie (114) sensiblement en forme de dôme.

12. Module de caisse de wagon selon l'une quelconque des revendications précédentes, **caractérisé en ce que**
- l'arête de séparation de courant (107) est formée sensiblement en ligne droite et/ou
- une enveloppe de limite de construction (112) est donnée pour la caisse de wagon (102) que la caisse de wagon (102) doit respecter, et l'arête de séparation de courant (107), au moins dans la direction de la hauteur du véhicule, s'étend sensiblement jusqu'à l'enveloppe de limite de construction (112).

13. Module de caisse de wagon selon l'une des revendications précédentes, **caractérisé en ce que**
- une pluralité d'éléments turbulateur (115) est prévue dans la zone de l'arête de séparation de courant (107) pour introduire des turbulences dans une couche de cisaillement (108) formant après la séparation du courant au niveau de l'arête de séparation de courant (107)"
- au moins l'un des éléments turbulateur (115), en particulier, étant formé comme saillie en forme d'ailette sur la face inférieure (102.2) de la caisse de wagon (102) qui est arrangée, en particulier, de manière inclinée par rapport à la direction longitudinale du véhicule
et/ou
- au moins l'un des éléments turbulateur (115), en particulier, étant adapté à dévier, à partir d'un plan central longitudinal de la caisse de wagon (102), la partie incidente du courant d'air dans la direction transversale du véhicule.

14. Caisse de wagon avec un module de caisse de wagon (105) selon l'une quelconque des revendications précédentes.

15. Véhicule ayant une caisse de wagon selon la revendication 14, en particulier, étant un véhicule pour un fonctionnement à grande vitesse, avec une vitesse nominale supérieure à 250 km/h, notamment supérieure à 300 km/h.
